# EUROPEAN PATENT APPLICATION

(11) **EP 4 571 511 A1**
(43) Date of publication of application: **18.06.2025**
(21) Application number: 24193800.0
(22) Date of filing: 09.08.2024
(51) Int. Cl.: G06F 9/50, G06F 11/30, G06F 11/34, G06F 11/3668

(54) **AGENT EVALUATION FRAMEWORK**

(30) Priority: 15.12.2023 US 202363611035 P; 01.08.2024 US 202418792072
(71) Applicant: Palantir Technologies Inc., Denver, CO 80202 (US)
(72) Inventor: ARORA, Megha, Denver, 80202 (US); MOHAMMED, Yishak Tofik, Denver, 80202 (US); KRISHNAN, Sriram, Denver, 80202 (US); SCHRADER, Max-Phillip, Denver, 80202 (US); TYSHEVSKYI, Pavlo, Denver, 80202 (US); BEIL, Johannes, Denver, 80202 (US); AGRAWAL, Akshay, Denver, 80202 (US); EDWARDS, Alexander, Denver, 80202 (US); PERRIN, Jessica, Denver, 80202 (US); KEBUDI, David, Denver, 80202 (US)
(74) Representative: Sayer, Robert David

(57) **Abstract**

A system may receive a first user input requesting to provide an evaluator agent configuration for an evaluator agent. A system may receive a second user input specifying information associated with an agent to be evaluated. A system may receive a third user input specifying an evaluation tool, wherein the evaluation tool is configurable to evaluate the information associated with the agent. A system may receive a fourth user input specifying an evaluation tool configuration associated with the evaluation tool. A system may create the evaluator agent based on the evaluator agent configuration, wherein the evaluator agent configuration comprises an indication of the information associated with the agent to be evaluated, an indication of the evaluation tool, and an indication of the evaluation tool configuration. A system may include evaluating, using the evaluator agent, the information associated with the agent.

## Description

### TECHNICAL FIELD

The present disclosure relates to systems and techniques for data integration, analysis, and visualization. More specifically, the present disclosure relates to computerized systems and techniques for evaluating artificial intelligence powered agents and possibly for effecting, prompting, and/or guiding users to make changes in response to certain evaluation results.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more computer-based models. For example, agents (e.g., artificial intelligence (AI) powered agents) can be deployed by computing systems to solve various computational tasks and problems.

### SUMMARY

The systems, methods, and devices described herein each have several aspects, no single one of which is solely responsible for its desirable attributes. Without limiting the scope of this disclosure, several non-limiting features will now be described briefly.

An agent can be configurable and deployed by a computing system to execute a task or solve various problems, such as sending requests to a large language model ("LLM") service. However, as agent configurations are developed to solve increasingly complex problems, inadequate agent evaluation techniques may make it difficult to determine whether the agent's output is sensible or reliable. Current evaluation techniques may not comprehensively assess an agent's performance. For example, evaluation techniques may not assess an agent's result and/or an agent's execution patterns, including for example, the agent's logic, an agent's interaction with memory and/or a specific ontology, an agent's interaction with an LLM (or other computer-based model), one or more tools used by the agent, and/or the like. Moreover, current evaluation techniques may not provide the ability to rapidly compare the configurations, execution patterns, and/or outcomes of two or more agent configurations (e.g., two distinct agents assigned to execute the same task, each configured to use different LLMs, tools, ontologies, accessories, and/or the like). Additionally, inadequate agent evaluation techniques may make it difficult to detect system-level issues associated with underlying models, patterns of execution, implementation logic, data inputs, accessories, and/or the like.

The present disclosure implements systems and methods (generally collectively referred to herein as "an agent system" or simply a "system") that can advantageously overcome various of the technical challenges mentioned above, among other technical challenges. The present disclosure further includes various processes, functionality, and interactive graphical user interfaces (hereinafter a "GUI") related to the system. The system can advantageously provide a flexible and robust architecture for quickly assessing an agent's performance, comparing multiple agent configurations, and resolving agent-related issues, as described herein. For example, according to various implementations, the system (and related processes, functionality, and interactive GUIs), can advantageously create and run an evaluator agent based on an evaluator agent configuration. An evaluator agent is a specialized type of agent, configured to perform evaluation tasks associated with assessing another agent's execution patterns, outcomes, and/or thought processes, to identify and/or resolve issues associated with the agent and/or a system (e.g., underlying models, patterns of execution, implementation logic, data inputs, bugs, and/or the like). Assessing an agent's execution patterns can include assessing the steps and/or sequence of steps an agent executed to accomplish a task, while assessing an agent's outcome can include assessing the very result of a step, a sequence of steps, and/or an agent run. Moreover, assessing an agent's through process can include comparing what the agent accomplished versus what the agent was trying to accomplish in a step and/or a sequence of steps.

Evaluator agents can be configured by a user and/or by the system, based on an evaluator agent configuration. An evaluator agent configuration can be a framework for creating an evaluator agent, including one or more user inputs selecting: a base agent (e.g., the target agent to be evaluated, which may include another evaluator agent), version control identifiers for an evaluator agent, data for a prompt to define a goal of an evaluator agent and/or to provide instructions for an evaluator agent's interaction with an LLM (or other computer-based model), evaluation tool(s), evaluation tool configuration(s), a reference (e.g., a "gold standard" for evaluation), and/or additional configuration parameters as disclosed herein.

After a user and/or the system specifies one or more aspects of an evaluator agent configuration, the system can create an evaluator agent. Once requested via a user input, the system can execute (e.g., run) an evaluator agent, to perform one or more evaluation tasks in accordance with evaluation tools, evaluation tool configurations, and/or other features selected as part of an evaluator agent configuration as described herein. After execution, an evaluator agent can generate evaluation metrics associated with one or more aspects of an agent.

As mentioned above, a system can receive a user input selecting evaluation tools as part of an evaluator agent configuration. The system can receive a user input selecting evaluation tools for executing agent logic. Agent logic can include running comparisons, computing specific metrics, and/or the like (e.g., a deterministic evaluation tool). Additionally and/or optionally, the system can receive a user input selecting evaluation tools that invoke an LLM. In some examples, the system can generate a prompt in response to a user input selecting a nondeterministic evaluation tool, receive user input into the prompt, and transmit the prompt to an LLM (e.g., a nondeterministic evaluation tool). In addition to evaluation tools and/or a prompt, the system can receive a user input selecting a reference as part of an evaluator agent configuration. A reference can be a result from a previously executed agent (e.g., a log, a step, and/or a sequence of steps), an accessory, and/or the like used as a "golden standard" for comparison purposes.

The system may be flexible enough to include additional configuration parameters as part of an evaluator agent configuration. For example, the system can receive a user input to configure an evaluator agent to run in a batch evaluator type, where one or more run logs of a base agent are selected and evaluated, or in a live evaluator type where the evaluator agent evaluates a base agent log in parallel with a base agent run. Further, the system can receive a user input to configure an evaluator agent to execute tasks independently from a base agent run, or dependently where the evaluator agent is configured to interfere with the base agent run. Additionally, the system can receive a user input to configure an evaluator agent to execute an action. An action can include generating an alert, and/or aborting a base agent run upon detection of a triggering condition (e.g., a failure associated with the execution of a base agent). Moreover, the system can receive a user input and configure and evaluator agent to define the scope of an evaluator agent's execution, including for example, whether the evaluator agent should evaluate a portion of a base agent run, or an entire run.

The system may employ multiple evaluator agents based on one or more evaluator agent configurations. For example, the system can create a first set of evaluator agents to continuously monitor a base agent, while creating a second set of evaluator agents to monitor specific tasks associated with the first set of evaluator agents, thus creating a distributed network of evaluator agents to efficiently detect issues in real-time.

The system can generate evaluation metrics (e.g., an execution status, an evaluation result, an evaluator action, an evaluator identifier, and/or the like) based on the results of an executed evaluator agent. Additionally, the system may be further configured to monitor and evaluate both system metrics (e.g., API call error rates, run duration, tool usage rates, and/or the like) as well as evaluation metrics to ultimately surface problems with underlying models, patterns of execution, implementation logic, data inputs, bugs, and/or the like. Advantageously, combining and displaying system metrics along with evaluation metrics can provide a fuller understanding of a system's performance.

Additionally, various embodiments of the present disclosure are inextricably tied to computer technology. In particular, various embodiments rely on detection of user inputs via graphical user interfaces, calculation of updates to displayed electronic data based on those user inputs, automatic processing of related electronic data, application of language models and/or other artificial intelligence, and presentation of the updates to displayed information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various embodiments cannot reasonably be performed by humans alone, without the computer technology upon which they are implemented. Further, the implementation of the various embodiments of the present disclosure via computer technology enables many of the advantages described herein, including more efficient interaction with, and presentation of, various types of electronic data.

According to various implementations, large amounts of data are automatically and dynamically calculated interactively in response to user inputs, and the calculated data is efficiently and compactly presented to a user by the system. Thus, in some implementations, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interface via the inputs described herein may provide an optimized display of, and interaction with, models and model-related data, and may enable a user to more quickly and accurately access, navigate, assess, and digest the model-related data than previous systems.

Further, the interactive and dynamic user interfaces described herein are enabled by innovations in efficient interactions between the user interfaces and underlying systems and components. For example, disclosed herein are improved methods for employing agents to evaluate agents and/or environments where agents interact. Advantageously, the system enables a user to quickly configure evaluator agents in accordance with an evaluator agent configuration. Additionally, the system may provide user interface(s) including an evaluator agent configuration, and request user input(s) selecting evaluation tool(s), evaluation tool configurations, references, and/or additional configuration parameters to evaluate an agent based on one or more assigned tasks.

Thus, various implementations of the present disclosure can provide improvements to various technologies and technological fields, and practical applications of various technological features and advancements. For example, as described above, existing computer-based evaluator agent configurations and integration technology is limited in various ways, and various implementations of the disclosure provide significant technical improvements over such technology. Additionally, various implementations of the present disclosure are inextricably tied to computer technology. In particular, various implementations rely on operation of technical computer systems and electronic data stores, automatic processing of electronic data, and the like. Such features and others (e.g., processing and analysis of large amounts of electronic data, management of data migrations and integrations, and/or the like) are intimately tied to, and enabled by, computer technology, and would not exist except for computer technology. For example, the interactions with, and configuration of, evaluator agents described below in reference to various implementations cannot reasonably be performed by humans alone, without the computer technology upon which they are implemented. Further, various implementations of the present disclosure via computer technology enables many of the advantages described herein, including more efficient creation and execution of evaluator agents via an evaluator agent configuration.

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise a computer-readable storage medium having program instructions embodied therewith, and one or more processors configured to execute the program instructions to cause the systems and/or computer systems to perform operations comprising one or more aspects of the above and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising a computer-readable storage medium are disclosed, wherein the computer-readable storage medium has program instructions embodied therewith, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1 illustrates an example computing environment including an agent system.
FIG. 2 illustrates an object-centric conceptual data model according to various implementations.
FIG. 3A is a flow chart depicting an example routine for creating an evaluator agent as part of an evaluator agent configuration user interface.
FIG. 3B is a flow chart depicting an example routine for receiving indication(s) of evaluation tool(s) and evaluation tool configuration(s) as part of an evaluator agent configuration.
FIG. 4 is an example user interface for configuring an evaluator agent as part of an evaluator agent configuration.
FIG. 5 is an example user interface for selecting one or more evaluator agents as part of an evaluator agent configuration.
FIG. 6 is an example user interface for configuring one or more evaluation tools as part of an evaluator agent configuration.
FIG. 7 is an example user interface for selecting information associated with an agent to be evaluated as part of an evaluator agent configuration.
FIG. 8 is an example user interface for displaying results associated with evaluator agent runs.
FIG. 9 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

### I. Overview

As mentioned above, the system can advantageously overcome various of the technical challenges mentioned above, among other technical challenges. The present disclosure further includes various processes, functionality, and interactive graphical user interfaces (hereinafter a "GUI") related to the system. The system can advantageously provide a flexible and robust architecture for quickly assessing an agent's performance, comparing multiple agent configurations, and resolving agent-related issues, as described herein. For example, according to various implementations, the system (and related processes, functionality, and interactive GUIs), can advantageously create and run an evaluator agent based on an evaluator agent configuration. An evaluator agent is a specialized type of agent, configured to perform evaluation tasks associated with assessing another agent's execution patterns, outcomes, and/or thought processes, to identify and/or resolve issues associated with the agent and/or a system (e.g., underlying models, patterns of execution, implementation logic, data inputs, bugs, and/or the like). Assessing an agent's execution patterns can include assessing the steps and/or sequence of steps an agent executed to accomplish a task, while assessing an agent's outcome can include assessing the very result of a step, a sequence of steps, and/or an agent run. Moreover, assessing an agent's through process can include comparing what the agent accomplished versus what the agent was trying to accomplish in a step and/or a sequence of steps.

Evaluator agents can be configured by a user and/or by the system, based on an evaluator agent configuration. An evaluator agent configuration can be a framework for creating an evaluator agent, including one or more user inputs selecting: a base agent, version control identifiers for an evaluator agent, data for a prompt to define a goal of an evaluator agent and/or to provide instructions for an evaluator agent's interaction with a large language model ("LLM") (or other computer-based model), evaluation tool(s), evaluation tool configuration(s), a reference, and/or additional configuration parameters as disclosed herein.

After a user and/or the system specifies one or more aspects of an evaluator agent configuration, the system can create an evaluator agent based on the evaluator agent configuration. Once requested via a user input, the system can execute (e.g., run) an evaluator agent, to perform one or more evaluation tasks in accordance with evaluation tools, evaluation tool configurations, and/or other features of the evaluator agent configuration as described herein. After execution, an evaluator agent can generate evaluation metrics associated with one or more aspects of an agent.

As mentioned above, a system can receive a user input selecting evaluation tools as part of an evaluator agent configuration. The system can receive a user input selecting evaluation tools for executing agent logic. Agent logic can include running comparisons, computing specific metrics, and/or the like (e.g., a deterministic evaluation tool). Additionally and/or optionally, the system can receive a user input selecting evaluation tools that invoke an LLM. In some examples, the system can generate a prompt in response to a user input selecting a nondeterministic evaluation tool, receive user input into the prompt, and transmit the prompt to an LLM (e.g., a nondeterministic evaluation tool). In addition to evaluation tools and/or a prompt, the system can receive a user input selecting a reference as part of an evaluator agent configuration. A reference can be a result from a previously executed agent (e.g., a log, a step, and/or a sequence of steps), an accessory, and/or the like used as a "golden standard" for comparison purposes.

The system may be flexible enough to include additional configuration parameters as part of an evaluator agent configuration. For example, the system can receive a user input to configure an evaluator agent to run in a batch evaluator type, where one or more run logs of a base agent are selected and evaluated, or in a live evaluator type where the evaluator agent evaluates a base agent log in parallel with a base agent run. Further, the system can receive a user input to configure an evaluator agent to execute tasks independently from a base agent run, or dependently where the evaluator agent is configured to interfere with the base agent run. Additionally, the system can receive a user input to configure an evaluator agent to execute an action. An action can include generating an alert, and/or aborting a base agent run upon detection of a triggering condition (e.g., a failure associated with the execution of a base agent). Moreover, the system can receive a user input and configure and evaluator agent to define the scope of an evaluator agent's execution, including for example, whether the evaluator agent should evaluate a portion of a base agent run, or an entire run.

The system may employ multiple evaluator agents based on one or more evaluator agent configurations. For example, the system can create a first set of evaluator agents to continuously monitor a base agent, while creating a second set of evaluator agents to monitor specific tasks associated with the first set of evaluator agents, thus creating a distributed network of evaluator agents to efficiently detect issues in real-time.

The system can generate evaluation metrics (e.g., an execution status, an evaluation result, an evaluator action, an evaluator identifier, and/or the like) based on the results of an executed evaluator agent. Additionally, the system may be further configured to monitor and evaluate both system metrics (e.g., API call error rates, run duration, tool usage rates, and/or the like) as well as evaluation metrics to ultimately surface problems with underlying models, patterns of execution, implementation logic, data inputs, bugs, and/or the like. Advantageously, combining and displaying system metrics along with evaluation metrics can provide a fuller understanding of a system's performance.

To facilitate an understanding of the systems and methods discussed herein, several terms are described below. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term "agent," as used in the present disclosure, can refer to a software- and/or computer-based decision making entity that is designed to be specialized at solving a class of problems. The class of problems that a particular agent can solve can include simple (e.g., sending a single request to a large language model (LLM) service) or more complex ones (e.g., chaining a set of tools behind each other in a dynamic fashion to solve a complex problem). An agent can be defined by a combination of building blocks including: agent logic (e.g., a core programmatic definition on how this specific agent should interact with available tools, configurations, and users); tools (e.g., a defined set of tools available for the specific agent); guardrails (e.g., a core security mechanism to control the interaction of the agent with the system, such as permissions regarding ontology access); and/or agent storage (e.g., also referred to as agent memory, including a data store and/or memory space allowing an individual agent to keep track of relevant information (e.g., messages and accessories) during and across runs). An example of a specialized agent is an "evaluator agent." An evaluator agent is a software- and/or computer-based decision making entity (e.g., an agent) specialized at identifying and/or solving one or more problems associated with another agent and/or with the system. The specific combination of building blocks and/or configurations that define an evaluator agent can be referred to as an "evaluator agent configuration" as described herein.

The term "configuration," as used in the present disclosure, can refer to a version-controlled specification of pointers to the building blocks of an agent and/or versions of the building blocks. For example, an agent can be configured to a specific configuration that associates the agent with a specific ontology, an LLM, one or more tools, one or more accessories, and/or the like. One example of a configuration is an evaluator agent configuration. An evaluator agent configuration can refer to a version controlled specification of pointers for creating a specific type of agent, (e.g., an evaluator agent). An evaluator agent configuration can include defining one or more of: a base agent, version control identifiers, text in a prompt to define a goal of an evaluator agent, evaluation tool(s), evaluation tool configuration(s), and/or reference(s), among other configurable aspects.

The term "coordinator," as used in the present disclosure, can refer to an entity that manages interactions among other entities. For example, the term "agent coordinator" can refer to an entity that manages interactions among agents deployed by an agent system. The agent coordinator may serve a role similar to a control tower to ensure agents act in coordination with each other in an intentional manner. For example, an agent coordinator may supervise handoffs of problems, tasks, or sub-tasks among agents to ensure handoffs are robustly performed and do not interfere with processing of other tasks or sub-tasks.

The term "tool," as used in the present disclosure, can refer to a specific capability that is available to an agent. A tool may be responsible to perform a deterministic action and/or a tool may include the use of an LLM and perform nondeterministic actions. A tool may allow an agent to interact with a system, a database, an ontology, internal databases, and/or external systems (e.g., an LLM). A tool can be any set of logic or rules that can be provided to an agent for the agent's use to obtain additional information, such as by generating a request for access to additional data via a plug-in. Thus, a tool can be used by an agent to generate requests (that may be fulfilled by the system) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), communicating with one or more LLMs, and/or any other functions that communicate with other external or internal components. Example tools include ontology function tools that may access and/or retrieve data from a database, date/time tools that may generate and or transmit the data/time, query objects tools that may query one or more datasets for data objects, data object types, a subset of data objects based on one or more properties and/or the like, calculator tools for computational functions, and apply action tools to execute one or more actions associated with an ontology, a dataset, an evaluation metric, a system metric, and/or the like. Tools, or the set of logic they comprise for performing one or more operations, may be defined by the system, an external system, an ontology and/or a user. A subset of tools can include evaluation tools. Evaluation tools can include tools having specific capabilities to accomplish one or more evaluation tasks associated with evaluating an agent and/or a system. Evaluation tools can be deterministic and/or nondeterministic as described above. An evaluation tool can include evaluation tool configurations, enabling a user to define one or more aspects of an evaluation tool's capabilities.

The term "run," as used in the present disclosure, can refer to a full and/or partial interaction of a user with an agent system in performance of a task, such as one or more interactions with an LLM and/or external data source. An individual run can refer to any portion of an interaction of a user with an agent system (e.g., a session, a step, a sequence of steps and/or the like). Information associated with a run may be stored by the agent system to facilitate evaluation by one or more evaluator agents. The information related to the individual run may be a run log (e.g., information associated with a step, a sequence of steps, and/or an entire run of an agent including outcomes of one or more steps and/or thought processes of an agent). A run log can include initial and subsequent prompts received by an agent from the user and/or from an LLM, starting and end timestamps of an individual runs (and/or steps, sequence of steps), status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like.

The term "accessory," as used in the present disclosure, can refer to an artifact of knowledge that is known to be correct to a system. Accessories can refer to information that may be useful or necessary for agents to process tasks. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks but may also be provided by users based on demands of users. Example accessories include: (a) the calculated sum of items in an inventory, (b) the identification (ID) of a document containing needed information, (c) the result of a system operation, such as the creation of a new user. Accessories may be stored as Objects in an ontology. Accessories can be of simple types, such as string, double, integer, or the like, and can also be of more complex types, such as images, dataframes, sound files, or the like. Accessories can be created by agents, by one or more uses, and/or by the system. For example, as part of executing a run, an agent may utilize a set of tools to create new accessories. As another example, before starting a run, users can select relevant existing accessories and/or create new accessories that contain relevant information for the specific problems to be solved. An agent system can track a lineage of an accessory to know, for example, which accessories were used by which tools to create the accessory.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like. A "nondeterministic model" as used in the present disclosure, is any model in which the output of the model is not determined solely based on an input to the model. Examples of nondeterministic models include language models such as LLMs, ML models, and the like.

A Language Model is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LlaMA (Large Language Model Meta AI), and BigScience Large Open-science Open-access Multilingual Language Model (BLOOM).

A "user operation" (or "User Input") can be any operations performed by one or more users to user interface(s) and/or other user input devices associated with a system (e.g., the data extraction system). User operations can include, for example, select, drag, move, group, or the like. User operations (e.g., input a text data to the data extraction system) can also prompt a task to be performed, such as by an LLM, in whole or in part.

A Prompt (or "Natural Language Prompt") can be, for example, a term, phrase, question, and/or statement written in a natural and/or human language (e.g., English, Chinese, Spanish, and/or another language), and/or other text string, that may serve as a starting point for a language model and/or other language processing. A prompt may include text generated by user input(s), the system, one or more tools, the result of an agent, an external system, a response from an LLM, and/or the like. A prompt may be provided to an LLM which the LLM can use to generate a response.

An Ontology can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types. An ontology may be used by an organization to model a view of, or provide a template for, what objects exist in the world, what their properties are, and how they are related to each other.

A Data Object (or "Object" or "Data Object Instance") is a data container for information representing a specific thing in the world that has a number of definable properties. For example, a data object can represent an interaction (e.g., recording events occurred during the interaction) between a user and an agent system. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A Data Object Type (or "Object Type") is a type of a data object (e.g., person, event, document, and/or the like). Data object types may be defined by an ontology and may be modified or updated to include additional object types. A data object definition (e.g., in an ontology) may include how the data object is related to other data objects, such as being a sub-data object type of another data object type (e.g., an agent may be a sub-data object type of a person data object type), and the properties the data object type may have.

A "data store" can be any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A "database" is any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like.

### Example Aspects Related to an Evaluator Agent Configuration

As mentioned above, an evaluator agent is a specialized type of agent, configured to perform evaluation tasks associated with assessing execution patterns, outcomes, and/or thought processes of another agent and/or a system (e.g., underlying models, patterns of execution, implementation logic, data inputs, bugs, and/or the like). Assessing an agent's execution patterns can include assessing the steps and/or sequence of steps an agent executed to accomplish a task, while assessing an agent's outcome can include assessing the very result of a step, a sequence of steps, and/or an agent run. Moreover, assessing an agent's through process can include comparing what the agent accomplished versus what the agent was trying to accomplish in a step and/or a sequence of steps.

Evaluator agents can be configured by a user and/or by the system, based on an evaluator agent configuration. An evaluator agent configuration can be a framework for creating an evaluator agent, including one or more user inputs selecting: a base agent, version control identifiers for an evaluator agent, data for a prompt to define a goal of an evaluator agent and/or to provide instructions for an evaluator agent's interaction with an LLM (or other computer-based model), evaluation tool(s), evaluation tool configuration(s), a reference, and/or additional configuration parameters as described below.

For example, the system can receive from a user and/or another system, a request to provide an evaluator agent configuration. In response, the system can generate a GUI, presenting an evaluator agent configuration UI to the user. The evaluator agent configuration UI can provide a user with ability to specify one or more configurable features (e.g., selection of a base agent, selection of evaluation tool(s), evaluation tool configuration(s), references, additional configuration parameters, and/or the like) associated with the execution of an evaluator agent.

Optionally, in response to a user input, the system can present a GUI including an evaluator agent template (hereinafter a "template"). The template can be a predefined evaluator agent configuration, defining for example, a base agent, evaluation tool(s), evaluation tool configurations, references, additional configuration parameters and/or the like. A template can be saved in, for example, a database and referenced by the system in response to a user request. Advantageously, a template can be used to quickly generate one or more evaluator agents, to identify issues and/or compare the performance of one or more aspects of an agent, an evaluator agent, and/or the system. For example, two evaluator agents can be created based on a template, each evaluator agent having the same evaluator agent configuration except for different LLMs. The two evaluator agents can be executed by the system to compare results of the two different LLM responses. In some implementations, a template can be used to quickly configure one or more underlying evaluator agents. For example, two evaluator agents can be configured based on a template, each evaluator agent having the same evaluator agent configuration except for different LLMs as described herein.

The system may assign version numbers and/or identification numbers (e.g., a string of text, an ID, or the like) to an evaluator agent and/or to an evaluator agent template as part of an evaluator agent configuration. Advantageously, the system can version control evaluator agents and/or templates to allow users to effectively track configurations and/or operations of an evaluator agent and/or multiple templates, and/or allow the system to compare and contrast strengths and weakness of evaluator agents when operating under disparate configurations.

Moreover, the system can request that a user specify text and/or one or more instructions for a prompt. A system can receive text and/or instructions, via a GUI, and/or the system can generate text and/or instructions in response to a user input selecting, for example, an evaluation tool, an evaluation tool configuration, a reference, and/or one or more additional configuration parameters associated with the system. In some examples, the system can generate a prompt, as part of an evaluator agent configuration, to define a name, provide a description, and/or define a goal for an evaluator agent. Additionally, the system can receive instructions from a user and/or generate instructions for a prompt in association with an LLM as described in more details below.

### Example Aspects Related to Base Agent Selection

The system can request that a user select a base agent. The system can receive a user input selecting a base agent via a GUI, and/or the system can select a base agent in response to a user input selecting, for example, an evaluation tool, an evaluation tool configuration, a reference, and/or one or more additional configuration parameters associated with the system. A user can identify a base agent by, for example, a reference to one or more run logs generated during execution of the base agent and/or a version ID associated with the base agent. The base agent can be any agent associated with system including, for example, another evaluator agent. A run log can include one or more entire runs, one or more steps, and/or a sequence of steps associated with a base agent. As described below, the system can evaluate a base agent after the agent has completed execution of a run, and/or during a base agent's run depending on one or more additional configuration parameters as part of the evaluator agent configuration. Advantageously, the system can evaluate, in real-time, the results of a step, and/or a decision sequence of a base agent while the base agent is executing a run, thus providing continuous and up-to-date evaluation data to the system. Additionally, and/or optionally, the system can evaluate run logs of a base agent in batches after a base agent as completed a run, to conserve processing power.

### Example Aspects Related to Evaluation Tool(s) Selection

The system can request that a user specify one or more evaluation tools. The system can receive a user input indicating one or more evaluation tools via a GUI and/or in response to, for example, selection of a reference, selection of a base agent, specifying instructions for a prompt, and/or the like. In response to a selected evaluation tool, the system can further receive one or more additional user inputs, specifying an evaluation tool configuration. An evaluation tool configuration can specify one or more aspects of an evaluation tool. In some examples, an evaluation tool configuration can specify information and/or instructions associated with a reference to a database, a data object, one or more property types, a JSON structure, one or more accessories, a prompt, and/or any other information and/or instructions relevant to execution and/or a capability associated with a selected evaluation tool.

The system can receive a user input specifying one or more evaluation tools configured to execute deterministic logic (e.g., a deterministic evaluation tool). For example, the system can provide evaluation tools that run comparisons, and/or compute specific metrics based on a result associated with an agent run (e.g., an output of an entire agent run, an output of a step associated with an agent run, and/or an output from a sequence of steps associated with an agent run). Further the system can receive a user input selecting one or more evaluation tool configurations in response to a user input selecting a deterministic evaluation tool as described above.

In one example, a user can create an evaluator agent based on an evaluator agent configuration that includes a deterministic evaluation tool (e.g., a structural evaluation tool). The evaluator agent can be configured to compare an email's structure, as generated by a base agent, to a predefined email structure. A user can specify the predefined email structure via one or more user inputs (e.g., via a user input selecting one or more evaluation tool configurations). In one example, the pre-defined structure can be a JSON structure. Once executed, the evaluator agent can compare the base agent's email structure to the structure provided in the evaluation tool configuration to determine whether the email structure is acceptable. The structural evaluation tool can further generate an evaluation metric including among other things, an output indicating whether the base agent's email structure meets the predefined email structure meets the predefined email structure. In some implementations, the structural evaluation tool can further generate an evaluation metric including among other things, additional details (e.g., such as information associated with a step, a sequence of steps, and/or an entire run of an agent including outcomes of one or more steps and/or thought processes of an agent, and/or the like), in the event that the evaluator agent determines that a failure occurred.

The system can receive a user input specifying one or more evaluation tools that invoke an LLM (e.g., a nondeterministic evaluation tool). An evaluation tool invoking an LLM can require additional user input specifying one or more evaluation tool configurations. The evaluation tool configurations can include, for example, a request that a user specify instructions for a prompt. A prompt can provide context to an LLM, assisting the LLM in understanding one or more functions of a selected evaluation tool.

In response to a user input selecting a nondeterministic evaluation tool, the system can generate instructions for a prompt and/or receive instructions for a prompt from a user via a GUI. The system can request and/or provide instructions for a prompt including for example: an evaluation tool definition, an evaluation tool description, an example input, an example response, and/or an example explanation for one or more tasks associated with an evaluation tool and/or another portion of the evaluator agent configuration. An evaluation tool definition can describe one or more properties of an evaluation tool such as an evaluation tool ID, a version for an evaluation tool, an owner and/or creator of an evaluation tool, and/or any searchable tags associated with an evaluation tool. An evaluation tool description can describe an overall objective of an evaluation tool and/or use cases for an evaluation tool. An example input can be a copy of data and one or more instructions to use the data as part of the LLM's response. For example, the system can receive from a user and/or generate instructions for a prompt that includes a list of one or more object types, references to an ontology, data object types, data objects, sets of data objects, and/or the like. An example response can include instructions describing an expected output format for an LLM response, such as instructions requesting that an LLMs response include an interchangeability score, a confidence score, and an explanation for a result and/or the like.

Additionally example instructions for a prompt can include: a request that an LLMs response include an expected output format, a request to generate a summary of the prompt received by the LLM, request to generate a portion of an evaluation log received by the LLM, a request to determine a confidence score associated with at least one step of a base agent, a request to select of one more tools in the LLMs response, a request to generate a sequence of the one or more tools in the LLMs response, a request to include a thought process to justify selection of a tool in the LLMs response, a request to generate an evaluation metric in the LLMs response, a request to steer the LLMs response to look at specific edge cases of a base agent (e.g., a specific step of a base agent and/or a specific case within a specific step), and/or a request to discern good from bad (e.g., pass/fail) based on a comparison of expected steps and actual steps executed by a base agent.

### Example Aspects Related to Selecting Reference (s)

The system can request that a user select one or more references (hereinafter "a reference"). The system can receive, via a GUI, a user input specifying a reference, and/or the system can specify a reference in response to, for example, a user input selecting an evaluation tool, an evaluation tool configuration, additional configuration parameters, and/or the like. The system can store a reference in memory, receive a reference from a user, and/or receive a reference from an external system. A reference can be, for example, a run log, a result from a run log, a step, a result based on a step, a sequence of steps, and/or a result based on a sequence of steps associated with a run log. Additionally a reference can include one or more accessories such as text, files, emails, and/or the like as described herein. In some examples, a reference is typically a successful run log and/or a run log of a base agent's most efficient and/or best performing run. As a specific example, a reference may point to an agent run log including an acceptable structure for the text of an email, one or more email addresses associated with the generated email, and/or the like. Advantageously, the system can quickly generate one or more evaluator agents capable of evaluating a base agent's subsequent run logs by specifying a reference, an evaluation tool, and an evaluation tool configuration a base agent, and/or additional configuration parameters. In some implementations, the system can quickly configure one or more evaluator agents from an underlying base agent. A configured evaluator agent can be capable of evaluating a base agent's subsequent run logs by specifying a reference, an evaluator tool, and an evaluation tool configuration of a base agent, and/or additional configuration parameters.

### Example Aspects Related to Additional Configuration Parameters

The system can request that a user input specify additional configuration parameters (hereinafter "parameters"). The system can receive a user input indicating values for parameters via a GUI, and/or the system may generate values for parameters in response to a user input selecting one or more evaluation tools, evaluation tool configurations, a reference, a base agent and/or the like. Additionally, the system may request that a user specify a second parameter in response to receiving a user input selecting a first parameter.

Parameters can further define a scope of an evaluator agent, the type of evaluation executed by the evaluator agent, and/or actions and triggers based on an evaluator agent's evaluation. Parameters can include, for example, one or more evaluator types, evaluator effects, and/or define an evaluator level as described herein. The system can request that a user select one or more evaluator types. In some examples, an evaluator type is determined by the system in response to, for example, a user input selecting a base agent, an evaluation tool, an evaluation tool configuration, a reference, and/or another parameter. An evaluator type can include a batch mode, a live mode, a dependent mode, and/or an independent mode.

In response to a user input indicating a batch mode, the system may configure an evaluator agent to evaluate a grouping of one or more run logs generated by a base agent. The grouping of run logs can be evaluated after the base agent completes one or more runs, one or more steps, and/or a sequence of steps. In response to selecting a batch mode, the system can identify the grouping of base agent run logs using a unique ID. Additionally and/or alternatively, the system can identify a grouping of run logs to evaluate based on a user input selecting one or more run logs from a list of run logs. The list of run logs can be presented to the user for selection via a GUI.

In response to a user input indicating a live mode, the system may configure an evaluator agent to evaluate run logs generated by a base agent during the base agent run (e.g., in parallel while the base agent is executing one or more steps). Additionally, after receiving a user input selecting a live mode, the system can configure an evaluator agent to receive a notification that a base agent is executing one or more steps, and in turn, automatically begin to evaluate run logs, a step, and/or decision sequences associated with the base agents execution. Advantageously, the system can configure an evaluator agent to evaluate, in real-time, the results of a step, and/or the results of a decision sequence while the base agent is executing a run, thus providing continuous and up-to-date evaluation data to the system. In some implementations, the system can provide continuous and up-to-date evaluation data to a user.

In response to a user input indicating a dependent mode, the system may configure an evaluator agent to evaluate and/or interfere with a base agent run. For example, if an evaluator agent detects an issue during a base agent run, the evaluator agent may interfere with further execution of the base agent run. The evaluator agent may, for example, abort a base agent's run and/or pause the base agent's run. Likewise, in response to a user input indicating an independent mode, the system may configure an evaluator agent to evaluate but not interfere with a base agent run.

The system can receive a user input specifying one or more evaluator effects. In response to a user specifying one or more evaluator effects, the system can configure an evaluator agent to execute one or more actions in response to an evaluation of a base agent. In some examples, an evaluator effect can be executed after an evaluator agent identifies an issue with a base agent run, a step, a sequence of steps and/or the like. For example, an issue may comprise detection of a failure or detection of an evaluation (e.g., an evaluation parameter) that meets one or more triggering criteria, for example indicative that the parameter is below a required performance threshold and/or is less performant than another agent performing a corresponding task. Evaluator effects can include for example, abort, and/or alert actions. In response to a user input selecting an "abort" evaluator effect, the system can configure an evaluator agent to abort, terminate, and/or pause execution of a base agent's run upon detection of a failure or trigger criteria. An abort evaluator effect may take the base agent out of service, at least temporarily, from a live system which the base agent comprises a part of, thereby avoiding errors or inefficiencies in said live system as a consequence of the abort. An abort evaluator effect may be indicated to the user via a graphical user interface element, thereby to indicate a technical state of the live system, and the graphical user interface element may further provide one or more instructions for guiding the user to overcome or alleviate the cause of the abort, for example prompting the user to replace the base agent with a different, potentially equivalent agent that has been evaluated to be performant or more performant. In response to a user input selecting an "alert" evaluator effect, the system can configure an evaluator agent to generate an alert and/or notification upon detection of an issue associated with a base agent, however, the evaluator agent may allow the base agent to continue execution of a run. For example, the alert evaluator effect may be generated responsive to a failure of detection of an evaluation (e.g., an evaluation parameter) that meets one or more triggering criteria which is or are less problematic to those described above for the abort evaluator effect. Alternatively, or additionally, an alert evaluator effect may be generated if the evaluation or evaluation parameter is approaching, but not yet at, the triggering criteria. Similar to the case for the abort evaluator effect, the alert evaluator effect may be indicated to the user via a graphical user interface element, thereby to indicate a technical state of a live system which the base agent comprises part of, such that the user is forewarned and possibly prompted to overcome or alleviate the cause of the alert. For example, the graphical user interface element may further provide one or more instructions for guiding the user to overcome or alleviate the cause of the alert evaluator effect, for example prompting the user to replace the base agent with a different, potentially equivalent agent that has been evaluated to be performant or more performant. Alternatively, the graphical user interface element may enable the user to overrule the alert, indicating that the alert is expected and/or does not require further action at that time.

The system can receive a user input defining an evaluator level. An evaluator level can define the steps and/or sequence of steps of a base agent run to be evaluated. For example, in response to a user input defining an evaluator level, the system can configure an evaluator agent to evaluate a specific step associated with a base agent run, a sequence of steps associated with a base agent run, and/or evaluate an entire run of the base agent. In some examples, the system can receive a user input defining an evaluator level including a starting decision step and/or an ending decision step. A starting decision step can be, for example, a number identifying a specific step of a base agent run, that an evaluator agent should begin evaluation, while an ending step can be a number identifying a specific step of the base agent's run that the evaluator agent should stop evaluation (e.g., starting decision steps is 2 and the ending decision step is 5, the system will configure an evaluator agent to evaluate steps including 2-5). In some examples, the system can configure an evaluator agent to evaluate a base agent's entire run when the system receives a user input selecting a "0" starting decision step and a "-1" ending decision step. Additionally, in response to a user defining an evaluator level, the system can receive a user input selecting an evaluator target. An evaluator target can instruct the evaluator agent to evaluate a base agent output and/or a base agent thought process (e.g., what a base agent did versus what a base agent was trying to do). A base agent thought process can include, for example, a step and/or a list of steps executed by the base agent, and/or one or more responses from an LLM as part of the base agent's execution.

In some examples, the system can enable and/or disable one or more additional configuration parameters based on a user input selecting an initial parameter. As an example and not meant to be limiting, if a user selects a batch mode, the system may automatically enable a user input for selecting an "alert" evaluator effect while disabling a user input for selecting an "abort" evaluator effect, as batch mode evaluates based on the logs of a completed base agent run, and evaluator effects "abort" function during a base agent run.

### Example Aspects Related to Performance Metrics

The system can generate evaluation metrics in response to a completed evaluator agent run. Evaluation metrics can be stored in a database and/or provided to a user via a GUI. Additionally and/or alternatively, the system can transmit evaluation metrics to one or more agents and/or to an external system. In some examples, a table including one or more evaluation metrics can be provided to a user. A table can display, for example, results of completed runs for one or more evaluator agents. As an example, a table displaying evaluation metrics can include: an execution status (e.g., complete, incomplete), an evaluation result (valid, invalid, pass, fail, a response based on the execution of an evaluation tool, a response from an LLM such as an interchangeability score and/or a compatibility score, and/or the like) an evaluator action (e.g., pass_continue, fail_continue, and/or fail_abort), an evaluator agent version control identifier, an evaluator agent configuration version control identifier, and/or the like.

Advantageously, evaluation metrics can include instructions for the prompt of an LLM. Based on an evaluator agent's evaluator agent configuration, the system can transmit evaluation metrics to one or more agents. The one or more agents can be configured with tools and/or configured to interact with an LLM as described herein to, for example, resolve one or more issues identified by the evaluator agent with a database (e.g., add/remove/edit a data object, a property type, and/or the like).

Additionally, the system can be configured to evaluate both system metrics as well as evaluation metrics as part of an evaluator agent configuration. System metrics can include, for example, API call error rates, run duration, tool usage rates, and/or the like. System metrics and evaluation metrics can be evaluated by an evaluator agent via, for example an evaluator agent configuration selecting a base agent, an evaluation tool, an evaluation tool configuration, a reference, parameters, and/or the like. Advantageously, the system can use both system metrics and evaluation metrics to identify problems associated with the system. In some implementations, a user can use both system metrics and evaluation metrics to identify problems associated with the system. Creating evaluator agents to monitor both system metrics and evaluation metrics can enable the system to identify issues in, for example, underlying models, patterns of execution, implementation logic, data inputs, bugs, and/or the like. In some implementations, creating evaluator agents to monitor both system metrics and evaluation metrics can enable a user to identify issues in, for example, underlying models, patterns of execution, implementation logic, data inputs, bugs, and/or the like. For example, the system may automatically configure multiple evaluator agents to evaluate and identify one or more issues associated with a base agent's use of one or more tools in response to an identified tool usage rate increase and/or decrease. Further, based on the repair to an underlying issue (e.g., changes made to resolve an identified issue and/or the like), system metrics along with evaluation metrics can be used to assess efficacy of the repair.

### Example Aspects Related to a Distributed Evaluator Agent Network

Depending on limitations of the system, and/or the size and complexity of a base agent, it may be advantageous to implement one or more evaluator agents to continuously evaluate a portion of a base agent. The system can create one or more evaluator agents, based on an evaluator agent configuration, to provide continuous evaluation for various aspects of a base agent. For example, a first evaluator agent can be configured to evaluate a specific task and/or a subset of tasks from a sequence of tasks associated with the execution of a base agent. As a base agent runs, a primary evaluator agent can generate and stream logs to one or more secondary agents, which perform specific evaluation tasks associated with the received logs from the first agent. Advantageously, a distributed network of evaluator agents (e.g., a sidecar evaluation) can enable the system to efficiently evaluate and identify issues in real time. Further, a distributed network of evaluator agents can allow the system to distribute tasks without burdening a first evaluator agent with extensive logging responsibilities.

### Example Aspects Related to User Interfaces

The system may allow users to interact with the system through one or more user interfaces (e.g., via a GUI, a user device, or other types of user interfaces) to allow users to specify one or more aspects of an evaluator agent configuration, interact with agents, and verify results generated by agents. In various implementations, users may configure an ontology, a LLM, tools, accessories, an agent storage, or select one or more aspects of an evaluator agent configuration through operating on a user interface. For example, a user may select tools (e.g., a calculator or other tools) the evaluator agent can utilize. Additionally and/or optionally, the user may specify one or more aspects of an evaluator agent configuration to select types of LLMs and/or machine learning (ML) models accessible to the evaluator agent through the user interface. The user interface may further allow users to view and track various evaluator agent configurations and/or evaluator agents (e.g., through version control identifiers noted above). Advantageously, a user may preserve a specific configuration of an evaluator agent that is tested to be effective for evaluating a specific type of issue while experimenting new configurations based on minor or minimal adjustments to the specific configuration without losing the efficacy of the specific evaluator agent's evaluator agent configuration.

In various implementations, the system can provide a user the ability to manipulate a user interface, to allow a user to evaluate or verify results generated by an evaluator agent. In some examples, the user interface may present information related to an individual run of an evaluator agent. For example, information related to an individual run may include a prompt received by an agent from a user, starting and end timestamps of an individual run, status (e.g., completed, succeeded, failed, or the like) of the individual run, timelines of occurrence of events while the evaluator agent executes the individual run, intermediate results generated by the evaluator agent, number of errors committed by a base agent when utilizing tools, and/or the like.

### II. Example Agent System and Related Computing Environment

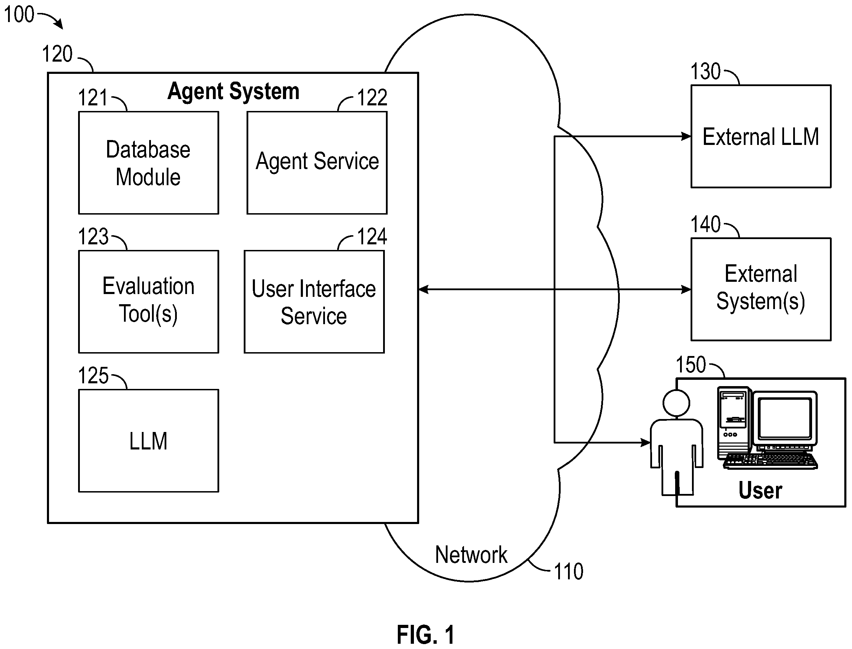

FIG. 1 illustrates an example computing environment 100 including an agent system 120 (referred to herein as "system 120"). The system 120 may include database module 121, agent service 122, evaluation tool(s) 123, LLM 125, and/or user interface service 124. The system 120 may connect via network 110 to other computing devices, such as external LLM 130, external system(s) 140, and user 150. For example, user 150 and/or external system(s) 140 may transmit a request to the system 120, to provide a user interface including aspects of an evaluator agent configuration. The system 120 may receive the request from the user 150 and/or the external system(s) 140, and in response, access information stored in database module 121, evaluation tool(s) 123, and/or external system(s) 140 to provide one or more aspects of an evaluator agent configuration (e.g., provide a list of one or more base agents for selection by the user 150 and/or external system(s) 140). Further, the system 120 can transmit a prompt and/or receive a response from LLM 125 and/or external LLM 130 in response to, for example, a user 150 request to create an evaluator agent.

Database module 121 may include a datastore and/or other data structure storing one or more aspects of an evaluator agent and/or an evaluator agent configuration. For example, database module 121 can be a database configured to receive and store data associated with evaluator agents and/or an evaluator agent configuration created by agent service 122 in response to a request from user 150 and/or external system(s) 140. In various implementations, data stored in database module 121 can include information associated with an evaluator agent and/or an evaluator agent configuration as mentioned above. Database module 121 can store information associated with user inputs selecting one or more aspects of an evaluator agent configuration in response to a request from user 150, external system(s) 140, agent service 122, user interface service 124 and/or the like.

Database module 121 can store information associated with a base agent. Database module 121 can receive and store information associated with a base agent from agent service 122 including one or more run logs generated during execution of a base agent and/or a version ID associated with a base agent. Information associated with a base agent can include data from one or more agents, even including run logs from evaluator agents.

Optionally, database module 121 can store a template. A template can include data associated with an evaluator agent configuration, including for example, selection of a base agent, evaluation tool(s), evaluation tool configurations, references, additional configuration parameters and/or the like. A template can be referenced by for example, agent service 122, and/or user interface service 124 in response to a request from a user 150, and/or external system(s).

Database module 121 may store an assigned version number and/or identification number (e.g., a string of text, an ID, or the like) for evaluator agents and/or for evaluator agent templates. Advantageously, database module 121 can maintain a version controlled database of evaluator agents and/or templates to allow users 150 to track configurations quickly and effectively. Additionally, database module 121 can provide data to an agent service 122, user interface service 124, external system(s) 140, and/or user 150, to compare and contrast strengths and weakness of evaluator agents when operating under disparate configurations.

Database module 121 can store data associated with references. Database module 121 can receive a reference from agent service 122, user interface service 124, external system(s) 140, and/or user 150. A reference can be an output from a base agent including, for example, a run log, a result from a run log, a step, a result based on a step, a sequence of steps, a result based on a sequence of steps associated with a run log, and/or an accessory as described herein.

Database module 121 can store evaluation metrics including, for example, results of completed runs from one or more evaluator agents, an execution status (e.g., complete, incomplete), an evaluation result (valid, invalid, pass, fail, a response based on the execution of an evaluation tool, a response from an LLM such as an interchangeability score and/or a compatibility score, and/or the like), an evaluator action (e.g., pass_continue, fail_continue, and/or fail_abort), an evaluator agent version control identifier, an evaluator agent configuration version control identifier, and/or the like. Database module 121 can store evaluation metrics in response to, for example, a completed evaluator agent run as executed by agent service 122. Evaluation metrics stored in database module 121 can be accessed by agent service 122, user interface service 124, external system(s) 140, and/or user 150. In some examples, evaluation metrics stored in database module 121 can be access by user interface service 124 and displayed via a GUI to a user.

Additionally, database module 121 can store system metrics. System metrics can include, for example, API call error rates, run duration, tool usage rates, and/or the like. Advantageously, database module 121 can store both system metrics and evaluation metrics, such that agent service 122, user interface service 124, external system(s) 140, and/or user 150 can access system metrics and evaluation metrics to identify problems associated with the system 120.

Agent service 122 may send and/or receive data from user 150, external system(s) 140, database module 121, evaluation tool(s) 123, LLM 125, and/or user interface service 124. Additionally, agent service 122 can add natural language text to the prompt of, and/or receive a response from LLM 125, and/or external LLM 130. For example, agent service 122 may receive and/or transmit data to external system(s) 140 through an API. Similarly, agent service 122 may receive data from an API from user 150 through appropriate API calls. Additionally, agent service 122 can execute steps and/or functions associated with database module 121 and/or evaluation tool(s) 123, such as storing a template in database module 121, and/or accessing information from database module 121 for use by an evaluator agent.

The agent service 122 may include a plurality of agents that may be utilized by the system 120 to solve various problems or process various tasks received from the user 150. Agents in the agent service 122 may coordinate with each other to solve problems or process tasks, thereby increasing the efficiency and accuracy of the system 120 in processing user inputs from the user 150. Agents employed by the agent service 122 may be configurable based on various settings or parameters. Additionally, configurations of agents can be version controlled by the agent service 122. The agent service 122 may generate and maintain a log to record events, timelines, received inputs, or generated outputs while agents process tasks or solve problems received from the user 150 (e.g., a run log). Additionally, the agent service 122 may maintain a log on database module 121. In various implementations, agents employed by the agent service 122 may coordinate with other agents by handing off tasks to agents (e.g., child-agents) which are suitable or specialized in performing the tasks. If an agent determines to handoff a sub-task to a child agent, the agent may choose to share knowledge with the child agent. For example, the agent may share an accessory with the child agent, where the accessory may be useful in processing the sub-task. The agent service 122 may provide storage (e.g., agent storage) for agents to store accessories and/or other information useful for processing tasks or problems and/or utilize database module 121 for agent storage. The agent service 122 may further utilize an agent coordinator to supervise handoffs of tasks or sub-tasks among agents to ensure handoffs are robustly performed and do not interfere with processing of other tasks or sub-tasks. In various implementations, the agent coordinator of the agent service 122 may facilitate communications among agents, and communications between agents and users or the system 120.

Advantageously, the agent service 122 enables agents to coordinate (e.g., handoff a task from one agent to another) with each other to effectively solve problems received from the user 150 in both time and resource efficient manners. Additionally, the agent service 122 allows agents to share information useful for processing tasks or solving problems effectively and reliably while respecting security and/or permissioning defined by the system 120 and/or the user 150. Further, through the assistance of the user interface service 124, the agent service 122 may allow the user 150 to track or monitor problem solving processes employed by the agent service 122 to evaluate the soundness of steps taken or decisions made by agents. The agent service 122 may further allow the user 150 to configure agents based on various user objectives to enhance scalability and reusability of the system 120.

An agent service 122 can receive a user input selecting a base agent via a GUI, and/or an agent service 122 can select a base agent in response to a user input selecting, for example, an evaluation tool, an evaluation tool configuration, a reference, and/or one or more parameters. In some examples, an agent service 122 can identify a base agent using data associated with database module 121 such as a reference to one or more run logs generated during execution of the base agent and/or a version ID associated with the base agent.

An agent service 122 can receive a user input specifying a reference. Additionally and/or alternatively, an agent service 122 can specify a reference in response to, for example, a user input selecting of evaluation tool(s) 123, an evaluation tool configuration, parameters, and/or the like. An agent service 122 can store one or more references as part of a configured evaluator agent in database module 121 and/or evaluation tool(s) 123. Advantageously, an agent service 122 can quickly configure one or more evaluator agents to evaluate a base agent's subsequent run logs in response to a user input indicating a reference.

Agent service 122 can receive a user input specifying one or more deterministic evaluation tools. For example, agent service 122 can execute evaluation tools that run comparisons, and/or compute specific metrics based on a result associated with an agent run (e.g., an output of an entire agent run, an output of a step associated with an agent run, and/or an output from a sequence of steps associated with an agent run). Agent service 122 can execute a deterministic tool according to an evaluation tool configuration. For example, agent service 122 can retrieve a JSON structure stored in evaluation tool(s) 123 and execute an evaluation tool that compares the JSON structure to an output of an agent.

Further, agent service 122 can execute one or more nondeterministic evaluation tools that invoke an LLM. Agent service 122 can request, for example, a user input specifying instructions for a prompt. A prompt can provide context to an LLM, assisting the LLM in understanding one or more functions of a selected evaluation tool. Agent service 122 can generate instructions for a prompt and/or receive instructions for a prompt from for example, user interface service 124, user 150, and/or external system(s) 140. Further, agent service 122 can retrieve instructions from for example, evaluation tool(s) 123 and/or database module 121.

Instructions retrieved, generated, and/or received by the agent service 122 can include: an evaluation tool definition, an evaluation tool description, an example input, an example response, an example explanation for one or more tasks associated with an evaluation tool and/or another portion of the evaluator agent configuration, a request that an LLMs response include an expected output format, a request to generate a summary of the prompt received by the LLM, request to generate a portion of an evaluation log received by the LLM, a request to determine a confidence score associated with at least one step of a base agent, a request to select of one more tools in the LLMs response, a request to generate a sequence of the one or more tools in the LLMs response, a request to include a thought process to justify selection of a tool in the LLMs response, a request to generate an evaluation metric in the LLMs response, a request to steer the LLMs response to look at specific edge cases of a base agent (e.g., a specific step of a base agent and/or a specific case within a specific step), and/or a request to discern good from bad (e.g., pass/fail) based on a comparison of expected steps and actual steps executed by a base agent.

An agent service 122 can receive a user input specifying parameters from, for example, user interface service 124, external system(s) 140, and/or user 150. An agent service 122 can receive a user input indicating values for parameters from user interface service 124, via a GUI, and/or the agent service 122 may generate values for parameters in response to a user input selecting one or more evaluation tool(s) 123, evaluation tool configurations, data associated with database module 121, and/or the like. Additionally, the agent service 122 may request that a user specify a second parameter in response to receiving a user input selecting a first parameter. Agent service 122 can configure and execute an evaluator agent according to one or more user inputs specifying parameters. Parameters can include evaluator types (e.g., batch mode, live mode, dependent mode, independent mode), evaluator effects (e.g., alert and/or abort), and/or defining an evaluator level (identifying a set and or sequence of steps from a base agent run log to be evaluated, and further defining an evaluator target) as described below with reference to FIG. 1.

In some examples, an agent service 122 can enable and/or disable one or more parameters in response to a user input selecting an initial parameter. As an example and not meant to be limiting, in response to a user input selecting batch mode, an agent service 122 may automatically enable a user input for selecting an "alert" evaluator effect while disabling an "abort" evaluator effect, as batch mode evaluates based on the logs of a completed base agent run, and evaluator effects "abort" function during a base agent run.

Optionally, agent service 122 can configure one or more evaluator agents based on a template stored in database module 121. As mentioned above, a template can include data associated with an evaluator agent configuration, including for example, a user input selecting a base agent, evaluation tool(s), evaluation tool configurations, references, parameters and/or the like. Agent service 122 can define one or more aspects of an evaluator agent configuration based on a template in response to a request from a user 150, and/or external system(s) 140. Advantageously, agent service 122 can use templates to quickly configure one or more evaluator agents. For example, agent service 122 can access a template to quickly generate two different evaluator agents having the same evaluator agent configuration, except for different LLMs (e.g., a first evaluator agent utilizes LLM 125, while a second evaluator agent utilizes external LLM 130). Agent service 122 can further execute both evaluator agents and provide the results from both evaluator agents to user interface service 124 for display via a GUI, such that a user 150 may determine efficacy of one or more LLMs.

An agent service 122 may create a network of evaluator agents to efficiently evaluate complex tasks associated with a base agent. Agent service 122 can generate a network of evaluator agents based on a user input selecting an evaluator agent configuration. For example, an agent service 122 can create a primary evaluator agent to evaluate a specific task and/or a subset of tasks from a sequence of tasks. As a base agent runs, the agent service 122 can transmit a stream of run logs created by the base agent to a primary agent. The agent service 122 can execute the primary agent, to review the run logs and generate additional data for one or more secondary agents, which perform specific evaluation tasks associated with the received data from the primary agent. Advantageously, an agent service 122 can facilitate a distributed network of evaluator agents (e.g., a sidecar evaluation) to enable the system 120 to efficiently evaluate and identify issues in real time. Further, an agent service 122 can facilitate a distributed network of evaluator agents to allow the system 120 to distribute tasks without burdening a primary evaluator agent with extensive logging responsibilities.

Evaluation tool(s) 123 may include a datastore and/or other data structure storing one or more aspects of evaluation tools used as part of an evaluator agent configuration. For example, evaluation tool(s) 123 can be a database configured to receive and store evaluation tools created and/or configured by agent service 122 in response to a request from user 150, and/or external system(s) 140. In various implementations, data stored in evaluation tool(s) 123 can include instructions to execute one or more evaluation tool(s) as part of an evaluator agent configuration. Evaluation tool(s) 123 can store, for example, agent logic, a JSON structure, and/or information for a prompt, in response to a user input specifying one or more aspects of an evaluator agent configurations.

Evaluation tool(s) 123 can store data associated with one or more deterministic evaluation tools configured to execute deterministic logic. For example, evaluation tool(s) 123 can store information, such as agent logic, used by agent service 122 to run comparisons, and/or compute specific metrics based on a result associated with an agent run (e.g., an output of an entire agent run, an output of a step associated with an agent run, and/or an output from a sequence of steps associated with an agent run). Evaluation tool(s) 123 can store information associated with one or more nondeterministic evaluation tools that invoke an LLM (e.g., such as LLM 125 and/or external LLM 130). A nondeterministic evaluation tool can require an additional user input specifying one or more evaluation tool configurations, such as information associated with instructions for a prompt.

Evaluation tool(s) 123 can store evaluation tool configurations. An evaluation tool configuration can be created and/or modified by user 150, external system(s) 140, agent service 122, LLM 125, external LLM 130, and/or user interface service 124 in response to a user input selecting an evaluation tool. Evaluation tool configurations can include instructions associated with accessing and/or modifying a database, a data object, one or more property types, a JSON structure, one or more accessories, a prompt, and/or any other information relevant to the execution and/or a capability associated with a selected evaluation tool as part of an evaluator agent configuration. As an example, user generated instructions for a prompt can be stored in evaluation tool(s) as part of an evaluation tool configuration for a nondeterministic tool. The instructions for a prompt can provide context to an LLM, assisting the LLM in understanding one or more functions of a selected evaluation tool.

Examples of instructions that may be stored in evaluation tool(s) 123 include: an evaluation tool definition, an evaluation tool description, an example input, an example response, and/or an example explanation for one or more tasks associated with an evaluation tool and/or another portion of the evaluator agent configuration as described above. Additionally evaluation tool(s) 123 can store instructions for a prompt including: a request that an LLMs response include an expected output format, a request to generate a summary of the prompt received by the LLM, request to generate a portion of an evaluation log received by the LLM, a request to determine a confidence score associated with at least one step of a base agent, a request to select of one more tools in the LLMs response, a request to generate a sequence of the one or more tools in the LLMs response, a request to include a thought process to justify selection of a tool in the LLMs response, a request to generate an evaluation metric in the LLMs response, a request to steer the LLMs response to look at specific edge cases of a base agent (e.g., a specific step of a base agent and/or a specific case within a specific step), and/or a request to discern good from bad (e.g., pass/fail) based on a comparison of expected steps and actual steps executed by a base agent.

User interface service 124 may transmit, receive, and/or retrieve data from various components of the computing environment 100. User interface service 124 may generate a GUI displayed on a client device, such as user 150. User interface service 124 may also receive data from user 150, external system(s) 140, and./or LLM 130. Further, the user interface service 124 may generate a GUI to display data from one or more components of the system 120 and/or external components, such as a response form LLM 125 and/or external LLM 130, information such as one or more aspects of an ontology from database module 121, an agent evaluation configuration crated by agent service 122, associated with an evaluation tool and/or an evaluation tool configuration from evaluation tool(s) 123, and/or the like. For example, user interface service 124 can receive a user input via a GUI, specifying one or more aspects of an evaluator agent configuration such as, a user input selecting an evaluation tool (e.g., a calculator or other tools). In response to a user input selecting an evaluation tool, the user interface service 124 can display one or more available evaluation tool configuration options to the user (e.g., displaying a prompt in response to a user input selecting a tool invoking an LLM).

In various implementations, the user interface service 124 can generate a GUI displaying information associated with an evaluator agent's run from database module 121. Information related to an evaluator agent's run may include a response from an LLM, starting and end timestamps of an individual run, status (e.g., completed, succeeded, failed, or the like) of an individual run, timelines of occurrence of events while the evaluator agent executes an individual run, intermediate results generated by an evaluator agent, number of errors committed by a base agent when utilizing tools, or the like. The user interface service 124 can generate a GUI including one or more user interactive elements for configuring an evaluator agent. The user interactive elements can allow user 150 to select, for example, a base agent, a reference, evaluation tool(s), evaluation tool configurations, and/or parameters. After receiving a user input selecting one or more aspects of an evaluator agent configuration, the user interface service 124 can generate, and/or transmit a request to agent service 122 to generate an evaluator agent in accordance with the evaluator agent configuration.

LLM 125 can be any type of language model that has been trained on a larger data set and has a larger number of training parameters compared to a regular language model. LLM 125 can understand more intricate patterns and generate text that is more coherent and contextually relevant due to its extensive training. Thus, LLM 125 may perform well on a wide range of topics and tasks. LLM 125 may include a NN trained using self-supervised learning. LLM 125 may be of any type and/or include one or more LLMs, including a QA LLM that may be optimized for generating answers from a context, a multimodal LLM/model, and/or the like. LLM 125 (and/or other models of the present disclosure), may include, for example, attention-based and/or transformer architecture or functionality. LLM 125 can be useful for natural language processing, including receiving natural language prompts from for example, agent service 122, user interface service 124, another LLM 125, external LLM 130, external system(s) 140, user 150, and/or the like. LLM 125 can generate a natural language response based on the text on which the model is trained.

External LLM 130 may be functionally the same and/or similar to LLM 125. External LLM 130 may be hosted by, for example, a third party platform. External LLM 130 can be any type of language model, that has been trained on a larger data set and has a larger number of training parameters compared to a regular language model. External LLM 130 can understand more intricate patterns and generate text that is more coherent and contextually relevant due to its extensive training. Thus, external LLM 130 may perform well on a wide range of topics and tasks. External LLM 130 may include a NN trained using self-supervised learning. External LLM 130 may be of any type, including a QA LLM that may be optimized for generating answers from a context, a multimodal LLM/model, and/or the like. External LLM 130 (and/or other models of the present disclosure), may include, for example, attention-based and/or transformer architecture or functionality. LLM 125 can be useful for natural language processing, including receiving natural language prompts from for example, database module 121, agent service 122, user interface service 124, LLM 125, external system(s) 140, user 150, or the like, and providing natural language responses based on the text on which the model is trained.

External system(s) 140 may include a third-party server and/or data store implemented as a computer system having logical elements. In an example implementation, the logical elements may include program instructions recorded on one or more machine-readable storage media. Alternatively, the logical elements may be implemented in hardware, firmware, or a combination thereof. The external system(s) 140 may include one or more modules. In various implementations, the external system(s) 140 can transmit a user input selecting one or more aspects of an evaluator agent configuration to user interface service 124 and/or agent service 122. For example, external system(s) 140 can transmit a user input selecting: a base agent, evaluation tool(s), evaluation tool(s) configurations, a reference, additional configuration parameters, and/or the like. Further, external system(s) 140 can receive information from the system 120 including for example, results of an evaluator agent from database module 121, an agent configuration from agent service 122, a request to select one or more aspects of an agent evaluation configuration provided by user interface service 124 and/or the like.

User 150 may include user device(s) to view and/or interact with a GUI generated by the user interface service 124. For example, the user 150 can include a wide variety of computing devices, including personal computing devices, terminal computing devices, laptop computing devices, tablet computing devices, electronic reader devices, mobile devices (e.g., desktop computer, notebook computer, smartphone, or any other type of computing device) and associated software (e.g. a browser capable of rendering output from information provided by, for example, user interface service 124).

The network 110 can include any one or more communications networks, such as the Internet. The network 110 may be any combination of local area network and/or a wireless area network or the like. Accordingly, various components of the computing environment 100, including the system 120, can communicate with one another directly or indirectly via any appropriate communications links and/or networks, such as network 110 (e.g., one or more communications links, one or more computer networks, one or more wired or wireless connections, the Internet, any combination of the foregoing, and/or the like). Similarly, the various components (e.g., as described below) of the system 120 and the computing environment 100 may, in various implementations, communicate with one another directly or indirectly via any appropriate communications links (e.g., one or more communications links, one or more computer networks, one or more wired or wireless connections, the Internet, any combination of the foregoing, and/or the like).

### III. Example Object-Centric Conceptual Data Model

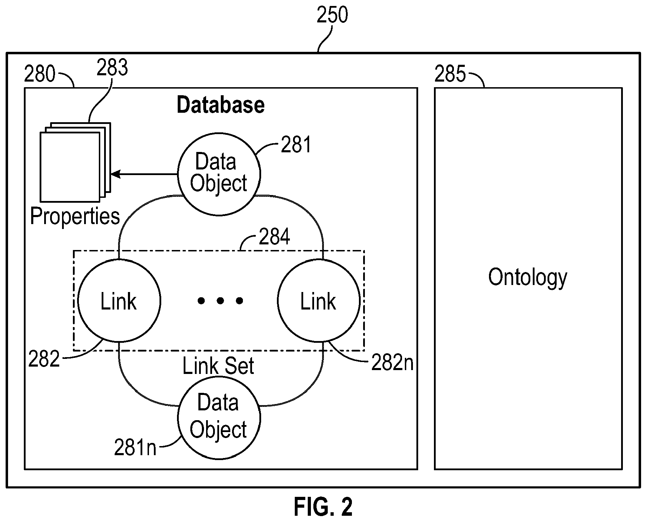

FIG. 2 illustrates an object-centric conceptual data model according to an implementation of an example visualization system 250 using an ontology 285.

The example visualization system 250 may correspond to database module 121 of FIG. 1 or any of the subcomponents of the system 120. Additionally, the system 120 and/or another component of the computing environment 100 can structure data according to an object-centric data model represented by an ontology described herein, thereby eliminating ambiguity, and enabling multiple components of the computing environment 100 to reference the same data using a common unique identifier. This description is provided for the purpose of providing an example and is not intended to limit the techniques to the example data model, the example database system, or the example database system's use of an ontology to represent information.

In one implementation, a body of data is conceptually structured according to an object-centric data model represented by the ontology 285. The conceptual data model is independent of any particular database used for durably storing one or more database(s) 280 based on the ontology 285. For example, each object of the conceptual data model may correspond to one or more rows in a relational database or an entry in Lightweight Directory Access Protocol (LDAP) database, or any combination of one or more databases. In some implementations, the database 280 may include one or more of the log data, data objects, and/or the process data.

An ontology 285, as noted above, may include stored information providing a data model for storage of data in the database 280. The ontology 285 may be defined by one or more object types, which may each be associated with one or more property types. At the highest level of abstraction, data object 281 is a container for information representing things in the world. In some examples, data object 281 may be a data object of the data objects 281n. For example, data object 281 can represent an entity such as a person, a place, an organization, a market instrument, or other noun. Data object 281 can represent an event that happens at a point in time or for a duration. Data object 281 can represent a document or other unstructured data source such as an e-mail message, a news report, or a written paper or article. Each data object 281 is associated with a unique identifier that uniquely identifies the data object within the database system.

Different types of data objects may have different property types. For example, a "Person" data object might have an "Eye Color" property type and an "Event" data object might have a "Date" property type. Each property 283 as represented by data in the visualization system 250 may have a property type defined by the ontology 285 used by the database 280.

Objects may be instantiated in the database 280 in accordance with the corresponding object definition for the particular object in the ontology 285. For example, a specific monetary payment (e.g., an object of type "event") of US$30.00 (e.g., a property of type "currency") taking place on 3/27/2009 (e.g., a property of type "date") may be stored in the database 280 as an event object with associated currency and date properties as defined within the ontology 285. The data objects defined in the ontology 285 may support property multiplicity. In particular, a data object 281 may be allowed to have more than one property 283 of the same property type. For example, a "Person" data object might have multiple "Address" properties or multiple "Name" properties.

Each link 282 represents a connection between two data objects 281n. In one implementation, the connection is either through a relationship, an event, or through matching properties. A relationship connection may be asymmetrical or symmetrical. For example, "Person" data object A may be connected to "Person" data object B by a "Child Of" relationship (where "Person" data object B has an asymmetric "Parent Of' relationship to "Person" data object A), a "Kin Of" symmetric relationship to "Person" data object C, and an asymmetric "Member Of" relationship to "Organization" data object X. The type of relationship between two data objects may vary depending on the types of the data objects. For example, "Person" data object A may have an "Appears In" relationship with "Document" data object Y or have a "Participate In" relationship with "Event" data object E. As an example of an event connection, two "Person" data objects may be connected by an "Airline Flight" data object representing a particular airline flight if they traveled together on that flight, or by a "Meeting" data object representing a particular meeting if they both attended that meeting. In one implementation, when two data objects are connected by an event, they are also connected by relationships, in which each data object has a specific relationship to the event, such as, for example, an "Appears In" relationship.

As an example of a matching properties connection, two "Person" data objects representing a brother and a sister, may both have an "Address" property that indicates where they live. If the brother and the sister live in the same home, then their "Address" properties likely contain similar, if not identical property values. In one implementation, a link between two data objects may be established based on similar or matching properties (e.g., property types and/or property values) of the data objects. These are just some examples of the types of connections that may be represented by a link and other types of connections may be represented; implementations are not limited to any particular types of connections between data objects. For example, a document might contain references to two different objects. For example, a document may contain a reference to a payment (one object), and a person (a second object). A link between these two objects may represent a connection between these two entities through their co-occurrence within the same document.

Each data object 281 can have multiple links 282n with another data object 281 to form a link set 284. For example, two "Person" data objects representing a husband and a wife could be linked through a "Spouse Of' relationship, a matching "Address" property, and one or more matching "Event" properties (e.g., a wedding). Each link 282 as represented by data in a database may have a link type defined by the database ontology used by the database.

### IV. Example Functionality of the Agent System

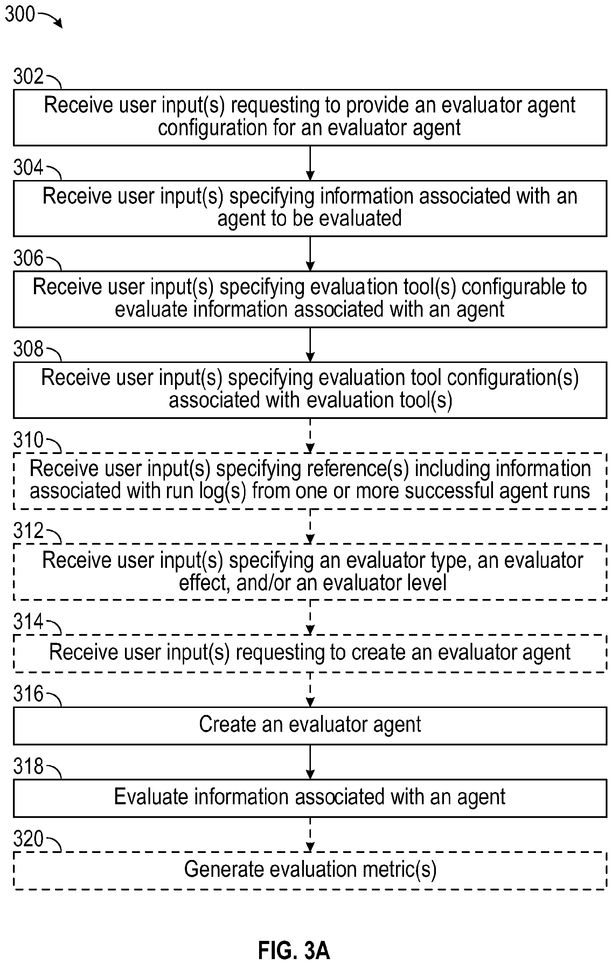

FIGS. 3A-3B are flow charts illustrating example operations of the system 120 (and/or various other aspects of the example computing environment 100), according to various embodiments. The blocks of the flow charts illustrate example implementations, and in various other implementations various blocks may be rearranged, optional, and/or omitted, and/or additional block may be added. In various implementations, the example operations of the system 120 illustrated in FIGS. 3A-3B may be implemented, for example, by the one or more aspects of the system 120 (e.g., agent service 122 and/or user interface service 124), various other aspects of the example computing environment 100, and/or the like.

FIG. 3A is a flow chart depicting an example routine 300 for receiving one or more user inputs as part of an evaluator agent configuration. As noted above, the system 120 can receive one or more user inputs selecting and/or specifying an evaluator agent configuration, including: a base agent, data for a prompt to define a goal of an evaluator agent and/or to provide instructions for an evaluator agent's interaction with an LLM (or other computer-based model), evaluation tool(s), evaluation tool configuration(s), a reference, and/or parameters. Thus such features can provide a flexible and robust architecture for quickly assessing an agent's performance, comparing multiple evaluation agent configurations, and resolving agent-related issues.

At block 302, the system 120 can receive user input(s) requesting to provide an evaluator agent configuration. Evaluator agents can be configured by a user 150, external system(s) 140, and/or by the system 120, based on an evaluator agent configuration. The system 120 can receive from a user 150 and/or external system(s) 140, a request to provide an evaluator agent configuration. In response, the system 120 can generate a GUI, presenting an evaluator agent configuration UI to the user. The evaluator agent configuration UI can provide a user with ability to specify one or more configurable features (e.g., selection of evaluation tool(s), evaluation tool configuration(s), references, additional configuration parameters, and/or the like) associated with the execution of an evaluator agent as mentioned above.

Optionally, in response to user input(s), the system 120 can present a GUI including a template. The template can include one or more predefined features for an evaluator agent configuration, defining for example, a base agent, evaluation tool(s), evaluation tool configurations, references, additional configuration parameters and/or the like. The system 120 can receive a user input requesting to edit one or more predefined evaluator agent configurations in response to a user input selecting a template. A template can be saved in, for example, database module 121 and referenced by the system 120 in response to a user request. Further, the system 120 may assign version numbers and/or identification numbers (e.g., a string of text, an ID, or the like) to an evaluator agent template and/or an evaluator agent configuration as part of a request to provide an evaluator agent configuration.

At block 304, the system 120 can receive user input(s) specifying information associated with an agent to be evaluated (e.g., a base agent). The system 120 can receive a user input selecting a base agent via a GUI. Additionally and/or alternatively, the system 120 can select a base agent in response to one or more user input(s) selecting, for example, an evaluation tool, an evaluation tool configuration, a reference, and/or one or more parameters associated with the system 120. A user can specify a base agent by, for example, a reference to one or more run logs generated during execution of the base agent and/or a version ID associated with the base agent. The base agent can be any agent associated with system including, for example, another evaluator agent. A run log can include one or more entire runs, one or more steps, and/or a sequence of steps associated with a base agent.

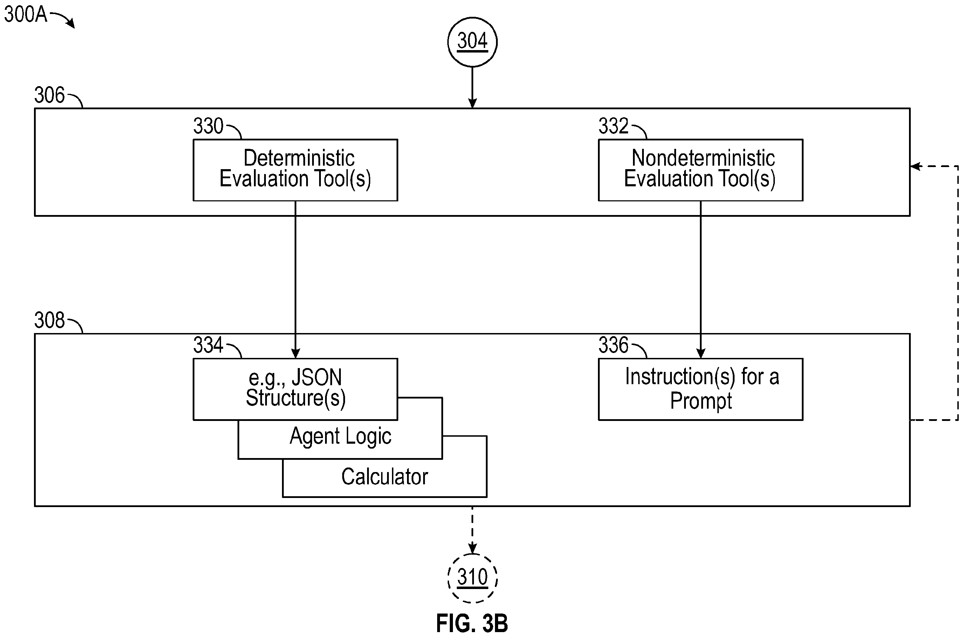

At block 306, the system 120 can receive user input(s) specifying evaluation tool(s) (e.g., stored in evaluation tool(s) 123) configurable to evaluate information associated with an agent (e.g., a base agent). The system 120 can receive a user input indicating one or more evaluation tools via a GUI. Further, the system 120 can select one or more evaluation tools in response to, for example, selection of a reference, selection of a base agent, specifying instructions for a prompt, and/or the like. The system 120 can receive user input(s) specifying one or more deterministic evaluation tools configured to execute deterministic logic and/or user input(s) specifying one or more nondeterministic evaluation tools configured to invoke an LLM. Further details of block 306 are described with reference to example routine 300A of FIG. 3B.

At block 308, the system 120 can receive user input(s) specifying evaluation tool configuration(s) associated with evaluation tool(s). In response to a selected evaluation tool, the system 120 can further receive additional user input(s), specifying an evaluation tool configuration. Evaluation tool configurations can be associated with deterministic tools and/or nondeterministic tools. Further details of block 308 are described with reference to example routine 300A of FIG. 3B

Optionally, the example routine 300 may execute block 310. At block 310, the system 120 can receive user input(s) specifying reference(s). The system 120 can receive, via a GUI, a user input specifying a reference. Additionally and/or alternatively, the system 120 can specify a reference in response to, for example, a user input selecting an evaluation tool, an evaluation tool configuration, additional configuration parameters, and/or the like. The system 120 can store a reference in memory (e.g., database module 121 and/or evaluation tool(s) 123), receive a reference from a user 150, and/or receive a reference from an external system(s) 140. As mentioned above, a reference can be, for example, a run log, a result from a run log, a step, a result based on a step, a sequence of steps, and/or a result based on a sequence of steps associated with a run log. Additionally a reference can include one or more accessories such as text, files, emails, and/or the like as described herein.

Optionally, the example routine 300 may execute block 312. At block 312, the system 120 can receive user input(s) specifying parameters (e.g., an evaluator type, an evaluator effect, or an evaluator level). The system 120 can receive a user input indicating values associated with one or more parameters via a GUI. The system 120 may generate values associated with one or more parameters in response to user input(s) selecting one or more evaluation tools, evaluation tool configurations, a reference, a base agent and/or the like. Additionally, the system 120 may request that a user specify a value for a second parameter in response to receiving a response specifying a value for a first parameter. As mentioned above, parameters can further define a scope of an evaluator agent, the type of evaluation executed by the evaluator agent, and/or actions and triggers based on an evaluator agent's evaluation. Parameters can include, for example, one or more evaluator types, evaluator effects, and/or define an evaluator level as described herein.

The system 120 can request that a user select one or more evaluator types. An evaluator type can include a batch mode, a live mode, a dependent mode, and/or an independent mode as mentioned above. The system 120 can receive a user input specifying one or more evaluator effects. As mentioned above, evaluator effects can include for example, abort, and/or alert actions. Further, the system 120 can receive a user input defining an evaluator level. As mentioned above, an evaluator level can define the steps and/or sequence of steps of a base agent run to be evaluated. Additionally, in response to a user defining an evaluator level, the system 120 can receive a user input selecting of an evaluator target as described above.

Further, the system 120 can enable and/or disable one or more additional configuration parameters based on a user input selecting an initial parameter. As an example and not meant to be limiting, if a user selects a batch mode, the system 120 may automatically enable a user input for selecting an "alert" evaluator effect while disabling a user input for selecting an "abort" evaluator effect, as batch mode evaluates based on the logs of a completed base agent run, and evaluator effects "abort" function during a base agent run.

Optionally, the example routine 300 may execute block 314. At block 314, the system 120 can receive user input(s) requesting to create an evaluator agent. The system 120 can receive from a user 150 and/or external system(s) 140, a request to create an evaluator agent. Additionally and/or alternatively the system 120 can create an evaluator agent in response to one or more user input(s) selecting aspects of an evaluator agent configuration (e.g., a base agent, a reference, an evaluation tool, an evaluation tool configuration, parameters, and/or the like).

At block 316, the system 120 can create an evaluator agent. The evaluator agent can be created based on one or more aspects of an evaluator agent configuration (e.g., user input(s) selecting a base agent, version control identifiers for an evaluator agent, data for a prompt to define a goal of an evaluator agent and/or to provide instructions for an evaluator agent's interaction with an LLM (or other computer-based model), evaluation tool(s), evaluation tool configuration(s), a reference, and/or parameters as mentioned herein. Additionally and/or alternatively, an evaluator agent can be created based on one or more aspects of a template stored in database module 121.

At block 318, the system 120 can evaluate information associated with an agent. The system 120 can execute one or more evaluation agents. Additionally and/or alternatively, the system 120 can receive a request from user 150 and/or external system(s) 140 to execute one or more evaluator agents. Once executed, an evaluator agent can perform evaluation tasks associated with assessing execution patterns, outcomes, and/or thought processes of another agent and/or the system 120 (e.g., underlying models, patterns of execution, implementation logic, data inputs, bugs, and/or the like). As mentioned above, assessing an agent's execution patterns can include assessing the steps and/or sequence of steps an agent executed to accomplish a task, while assessing an agent's outcome can include assessing the very result of a step, a sequence of steps, and/or an agent run. Moreover, assessing an agent's through process can include comparing what the agent accomplished versus what the agent was trying to accomplish in a step and/or a sequence of steps.

Optionally, example routine 300 can execute block 320. At block 320, the system 120 can generate evaluation metric(s). Evaluation metrics can be generated automatically in response to a completed evaluator agent run and/or generated in response to, for example, a request from the system 120, user 150, and/or external system(s) 140. Additionally and/or alternatively, evaluation metrics can be stored in a database (e.g., database module 121) and/or provided to a user via a GUI (e.g., by user interface service 124). The system 120 can transmit evaluation metrics to one or more agents, user 150, and/or to external system(s) 140. As further described below, evaluation metrics can be organized in a table.

FIG. 3B is a flow chart depicting details of example routine 300A for receiving additional user inputs as part of an evaluator agent configuration. The example routine 300A begins at block 304. Block 304 can be similar and/or the same as block 304 of example routine 300 of FIG. 3A

At block 306, the system 120 can receive user input(s) specifying evaluation tool(s) (e.g., stored in evaluation tool(s) 123) configurable to evaluate information associated with an agent (e.g., a base agent). The system 120 can receive a user input indicating one or more evaluation tools via a GUI. Further, the system 120 can select one or more evaluation tools in response to, for example, selection of a reference, selection of a base agent, specifying instructions for a prompt, and/or the like. The system 120 can receive user input(s) specifying deterministic evaluation tool(s) as described with reference to block 330 and/or nondeterministic evaluation tool(s) as described with reference to block 332.

At block 330, the system 120 can receive user input(s) specifying one or more deterministic evaluation tools configured to execute deterministic logic. For example, based on user input(s) selecting a deterministic tool, the system 120 can provide evaluation tools that run comparisons, and/or compute specific metrics based on a result associated with an agent run (e.g., an output of an entire agent run, an output of a step associated with an agent run, and/or an output from a sequence of steps associated with an agent run). Further deterministic tools can query datasets, process data including filtering or aggregating data, writing to datasets (e.g., adding or updating rows of a table, editing, or updating an object type, updating parameter values for an object instance, and/or generating a new object instance), and/or the like,

At block 332 the system 120 can receive a user input specifying one or more nondeterministic evaluation tools that invoke an LLM. A nondeterministic evaluation tool invoking an LLM can require an additional user input specifying one or more evaluation tool configurations. The evaluation tool configurations can include, for example, a request that a user specify instructions for a prompt. A prompt can provide context to an LLM, assisting the LLM in understanding one or more functions of a selected evaluation tool as described with reference to block 336.

At block 308, the system 120 can receive user input(s) specifying evaluation tool configuration(s) associated with evaluation tool(s). As mentioned above, an evaluation tool configuration can specify one or more aspects of an evaluation tool.

At block 330, the system 120 can receive user input(s) specifying an evaluation tool configuration associated with deterministic evaluation tool(s). The system 120 can receive user input(s) specifying deterministic evaluation tool configurations, via a GUI. The system 120 can receive user input(s) specifying information and/or instructions associated with a reference to a database, a data object, one or more property types, a JSON structure, one or more accessories, a prompt, and/or any other information and/or instructions relevant to execution and/or a capability associated with a deterministic evaluation tool. For example, in response to user input(s) selecting of a structural evaluation tool, the system 120 can receive additional user input(s) selecting an email structure (e.g., a JSON structure) used by the structural evaluation tool for comparison against a base agent's output.

At block 332, the system 120 can receive user input(s) specifying an evaluation tool configuration associated with a nondeterministic tool (e.g., an evaluation tool invoking an LLM). The system 120 can receive user input(s) specifying instructions for a prompt, via a GUI. Additionally and/or alternatively, the system 120 can generate instructions for a prompt in response to a user input selecting a nondeterministic evaluation tool. As mentioned above, the system 120 can receive user input(s) specifying instructions and/or provide instructions for a prompt including for example: an evaluation tool definition, an evaluation tool description, an example input, an example response, and/or an example explanation for one or more tasks associated with an evaluation tool and/or another portion of the evaluator agent configuration, and/or any other example instruction as mentioned herein. Additionally and/or alternatively, example instructions for a prompt can include: a request that an LLMs response include an expected output format, a request to generate a summary of the prompt received by the LLM, request to generate a portion of an evaluation log received by the LLM, a request to determine a confidence score associated with at least one step of a base agent, a request to select of one more tools in the LLMs response, a request to generate a sequence of the one or more tools in the LLMs response, a request to include a thought process to justify selection of a tool in the LLMs response, a request to generate an evaluation metric in the LLMs response, a request to steer the LLMs response to look at specific edge cases of a base agent (e.g., a specific step of a base agent and/or a specific case within a specific step), and/or a request to discern good from bad (e.g., pass/fail) based on a comparison of expected steps and actual steps executed by a base agent.

Optionally, once the system 120 receives user input(s) selecting a first deterministic and/or nondeterministic evaluation tool of block 306, along with an associated evaluation tool configuration of block 308, the system 120 can generate an additional request for user input(s) to further receive user input(s) selecting one or more additional evaluation tools. In some examples, user 150, external system(s) 140, and/or the system 120 can specify one or more deterministic and/or nondeterministic evaluation tools along with associated evaluation tool configurations as part of an evaluator agent configuration.

After block 308, the example routine 300A can continue, for example, to the optional step of block 310, 312, and/or 314, and/or to block 316 as described with reference to example routine 300 of FIG. 3A.

### V. Example User Interfaces of an Agent system

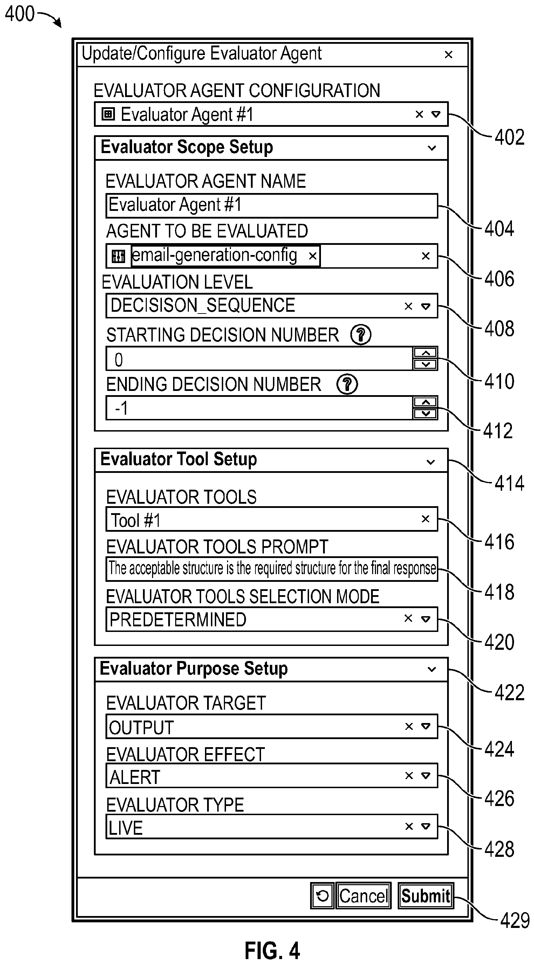

FIGS. 4-8 illustrate an example user interface of the system 120 as provided by, for example, agent service 122 and/or user interface service 124. The example user interface(s) are provided for the purpose of providing example implementations of aspects of the system 120 and are not intended to limit the implementations to the example user interface(s) provided.

FIG. 4 illustrates an example user interface 400 displaying one or more aspects of an evaluator agent configuration. The example user interface 400 illustrates various example functionality of the system 120 described, for example, in reference to block 302, 304, 306, 308, 312, 314 and/or 316 of example routine 300 and/or 300A. Advantageously, the system 120 enables a user to quickly configure evaluator agents in accordance with an evaluator agent configuration, including receiving input(s) selecting a base agent, evaluation tool(s), evaluation tool configurations, references, and/or parameters.

As part of example user interface 400, a user may select an evaluator agent via system prompt 402 as described with reference to block 302 of example routine 300. In some example implementations, system prompt 402 can include a dropdown list providing the user with one or more options, to begin configuring an evaluator agent based on one or more templates. Additionally, and/or optionally, system prompt 402 can provide a list enabling a user to edit an evaluator agent configuration for one or more evaluator agents.

As part of example user interface 400, a user may add text and/or select an evaluator agent name in system prompt 404. The evaluator agent name can include, for example, a version identifier. In some implementations, the version identifier for the evaluator agent configuration can be automatically generated by the system 120 in response to, providing an evaluator agent configuration.

Next, a user may select a base agent 406 as depicted in block 304 of example routine 300. A user can identify a base agent by, for example, a reference to one or more run logs generated during execution of the base agent and/or a version ID associated with the base agent. The base agent can be any agent associated with the system 120 including, for example, another evaluator agent. A run log can include one or more entire runs, one or more steps, and/or a sequence of steps associated with a base agent. In the present example, the user selected an "email-generation-config" base agent 406.

Next, a user may specify an evaluator level 408 as depicted in block 314 of example routine 300. An evaluator level 408 can define the steps and/or sequence of steps of a base agent run to be evaluated. For example, in response to a user input defining an evaluator level 408, the system 120 can configure an evaluator agent to evaluate a specific step associated with a base agent run, a sequence of steps associated with a base agent run, and/or evaluate an entire run of the base agent. As depicted in FIG. 4, the evaluator level 408 includes "Decision_Sequence" indicating that the user is requesting to evaluate a sequence of steps of a base agent.

In some examples, the system 120 can receive a user input defining an evaluator level 408 including a starting decision 410 and/or an ending decision 412. A starting decision 410 can be, for example, a number identifying a specific step of a base agent run, that an evaluator agent should begin evaluation, while an ending decision 412 can be a number identifying a specific step of the base agent's run that the evaluator agent should stop evaluation (e.g., starting decision steps is 2 and the ending decision step is 5, the system 120 will configure an evaluator agent to evaluate steps including 2-5). In some examples, the system 120 can configure an evaluator agent to evaluate a base agent's entire run when the system 120 receives a user input selecting a "0" starting decision 410 and a "-1" ending decision 412.

Next, a user may specify an evaluation tool 416 as part of an evaluation tool setup 414, as depicted in block 306 and/or 308 of example routine 300. As described above, the system 120 can receive a user input specifying one or more deterministic and/or nondeterministic evaluation tools 416 as part of an evaluation tool setup 414. For example, a user can select an evaluation tool 416 that run comparisons, and/or compute specific metrics based on a result associated with an agent run (e.g., an output of an entire agent run, an output of a step associated with an agent run, and/or an output from a sequence of steps associated with an agent run).

Further the system 120 can receive a user input selecting an evaluation tool configuration 418 and/or 420 in response to a user input selecting a deterministic evaluation tool 416 as depicted in blocks 330, 332, 334, and/or 336 of example routine 300A. In some examples, a user may specify, as part of an evaluation tool configuration 418, a predetermined selection mode, wherein the system 120 determines an evaluation tool 416. Additionally and/or optionally, an evaluation tool configuration 418 can include a prompt, requesting user input specifying a description for an evaluation tool 416. In some examples, an evaluation tool configuration 418, and/or 420 can specify information and/or instructions associated with a reference to a database, a data object, one or more property types, a JSON structure, one or more accessories, a prompt, and/or any other information and/or instructions relevant to execution and/or a capability associated with a selected evaluation tool 416.

Next, a user can specify parameters 422 (e.g., evaluation purpose setup) as part of an evaluator agent configuration as illustrated in example user interface 400 and depicted in block 312 of example routine 300. For example, a user can specify an evaluator target 424 can instruct the evaluator agent to evaluate a base agent output and/or a base agent thought process (e.g., what a base agent did versus what a base agent was trying to do). A base agent thought process can include, for example, a step and/or a list of steps executed by the base agent, and/or one or more responses from an LLM as part of the base agent's execution.

Next, a user can specify an evaluator effect 426 as illustrated in example user interface 400 and depicted in block 312 of example routine 300. In response to a user specifying an evaluator effect 426, the system 120 can configure an evaluator agent to execute one or more actions in response to an evaluation of a base agent. In some examples, an evaluator effect 426 can be executed after an evaluator agent identifies an issue with a base agent run, a step, a sequence of steps and/or the like. Evaluator effects 426 can include for example, abort and/or alert actions. In response to a user input selecting an "abort" evaluator effect 426, the system 120 can configure an evaluator agent to abort, terminate, and/or pause execution of a base agent's run upon detection of a failure. As illustrated in FIG. 4, the user has selected "alert" as an evaluator effect 426. In response to an "alert" evaluator effect 426, the system 120 can configure an evaluator agent to generate an alert and/or notification upon detection of an issue associated with a base agent. However, unlike "abort" an "alert" evaluator effect 426 allow the base agent to continue execution of a run.

Next, a user can specify an evaluator type 428 as illustrated in example user interface 400 and depicted in block 314 of example routine 300. The system 120 can request that a user select an evaluator type 428. In some examples, an evaluator type 428 is determined by the system 120 in response to, for example, a user input selecting a base agent, an evaluation tool 416, an evaluation tool configuration 418 and/or 420, a reference, and/or parameters 422. An evaluator type 428 can include a batch mode, a live mode, a dependent mode, and/or an independent mode.

In response to a user input selecting a batch mode, the system 120 may configure an evaluator agent to evaluate a grouping of one or more run logs generated by a base agent. The grouping of run logs can be evaluated after the base agent completes one or more runs, one or more steps, and/or a sequence of steps. In response to selecting a batch mode, the system 120 can identify the grouping of base agent run logs using a unique ID. Additionally and/or alternatively, the system 120 can identify a grouping of run logs to evaluate based on a user input selecting one or more run logs from a list of run logs. The list of run logs can be presented to the user for selection via a GUI.

In response to a user input selecting a live mode, as illustrated in evaluator type 428 of example user interface 400, the system 120 may configure an evaluator agent to evaluate run logs generated by a base agent during the base agent run (e.g., in parallel while the base agent is executing one or more steps). Additionally, after a user input selecting a live mode, the system 120 can configure an evaluator agent to receive a notification that a base agent is executing one or more steps, and in turn, automatically begin to evaluate run logs, a step, and/or decision sequences associated with the base agents execution. Advantageously, the system 120 can configure an evaluator agent to evaluate, in real-time, the results of a step, and/or the results of a decision sequence while the base agent is executing a run, thus providing continuous and up-to-date evaluation data to the system 120.

In response to a user input selecting a dependent mode, the system 120 may configure an evaluator agent to evaluate and/or interfere with a base agent run. For example, if an evaluator agent detects an issue during a base agent run, the evaluator agent may interfere with further execution of the base agent run. An evaluator agent may, for example, abort a base agent's run and/or pause the base agent's run. Likewise, in response to a user input selecting an independent mode, the system 120 may configure an evaluator agent to evaluate but not interfere with a base agent run.

Finally, a user can create an evaluator agent by selecting a user input 429 as illustrated in example user interface 400 and depicted in block 314, 316 of example routine 300. The system 120 can receive a user input 429 requesting to create an evaluator agent. The system 120 can receive from a user 150 and/or external system(s) 140, a request to create an evaluator agent. Additionally and/or alternatively the system 120 can create an evaluator agent in response to one or more user input(s) selecting aspects of an evaluator agent configuration (e.g., a base agent 406, a reference, an evaluation tool 416, an evaluation tool configuration 418 and/or 420, parameters, and/or the like). Further, the system 120 can create and/or edit an evaluator agent in accordance with a defined evaluator agent configuration based on one or more user selections including: an evaluator agent via system prompt 402; an evaluator agent name via system prompt 404; a base agent 406; an evaluator level 408; a starting decision 410; an ending decision 412; an evaluation tool setup 414 including evaluation tools 416 and evaluation tool configuration 418 and/or 420; and/or parameters 422 including an evaluator target 424, an evaluator effect 426, and/or an evaluator type 428.

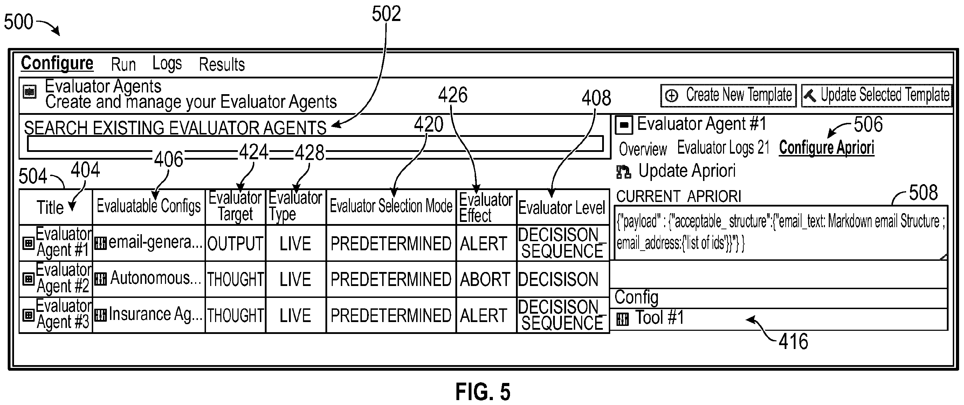

FIG. 5 illustrates an example user interface 500 displaying one or more evaluator agents. The example user interface 500 illustrates various example functionality of the system 120 described, for example, in reference to block 302, 304, 312, 314 and/or 316 of example routine 300 and/or 300A.

As part of example user interface 500, a user may search for evaluator agents via system prompt 502 as described with reference to block 302 of example routine 300. For example, the system 120 can receive a user input requesting to display an evaluator agent configuration for one or more evaluator agents. Additionally and/or alternatively, the system 120 can receive a query and/or filter for one or more evaluator agents.

Next, in response to the user input, the system 120 can access, for example, database module 121 to provide information about one or more evaluator agents via a table 504. Advantageously, the system 120 can display one or more aspects of an evaluator agent configuration as part of table 504, such that user can quickly compare one or more evaluator agents. Table 504 can be generated in response to one or more user inputs as part of an evaluator agent configuration as depicted in user interface 400 of FIG. 4. In some implementations, table 504 can display information associated with evaluator agent configurations for one or more evaluator agents including: a name for an evaluator agent as selected in system prompt 404; a base agent 406; an evaluator target 424, an evaluator type 428, an evaluation tool configuration 420, an evaluator effect 426, and/or an evaluator level 408.

Next, as part of example user interface 500, the system 120 can include a system prompt 506 displaying an evaluation tool 416 and/or requesting user input specifying a reference 508 as depicted in block 310 of example routine 300. Additionally and/or alternatively, the system 120 can specify a reference 508 in response to, for example, a user input selecting an evaluation tool 416, an evaluation tool configuration 420, parameters, and/or the like. The system 120 can store a reference 508 in memory (e.g., database module 121), receive a reference 508 from a user, and/or receive a reference from an external system(s) 140. A reference 508 can be, for example, a run log, a result from a run log, a step, a result based on a step, a sequence of steps, and/or a result based on a sequence of steps associated with a run log. Additionally a reference 508 can include one or more accessories such as text, files, emails, and/or the like as described herein. In some examples, a reference 508 is typically a successful run log and/or a run log of a base agent's most efficient and/or best performing run. As depicted in user interface 500, a reference 508 point to a JSON structure for evaluating the structure of an email.

In an additional implementation, reference 508 can be the same and/or similar to evaluation tool configuration 418 of example user interface 400. For example, as depicted in example user interface 500, the user selected a deterministic evaluation tool 416. In response to a user input selecting a deterministic evaluation tool 416, the system 120 can receive a user input specifying an evaluation tool configuration, and display as part of system prompt 506, information associated with a selected evaluation tool configuration as reference 508 (e.g., a JSON structure). Further, an evaluation tool configuration and/or a reference 508 can both be used by one or more evaluation tools 416 to evaluate a base agent 406. Thus, in some implementations, a reference 508 and an evaluation tool configuration can be interchangeably used as part of an evaluator agent configuration.

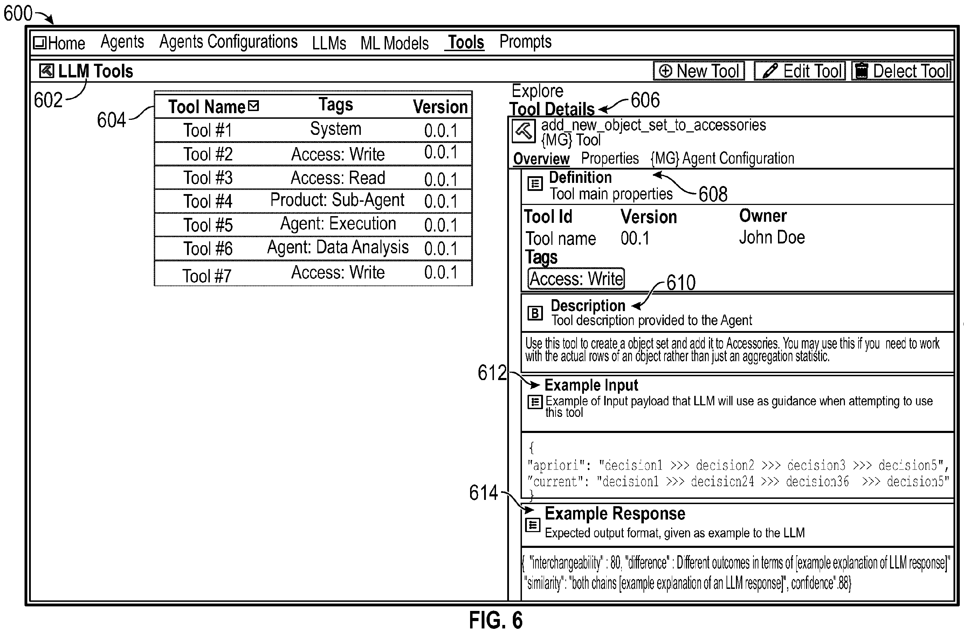

FIG. 6 illustrates an example user interface 600 for configuring one or more evaluation tools. The example user interface 600 illustrates various example functionality of the system 120 described, for example, in reference to block 306, 308, 330, 332, 334, and/or 336 of example routine 300 and/or 300A.

As part of example user interface 600, a user may configure one or more evaluation tools via system prompt 602 as described with reference to block 306 of example routine 300. For example, the system 120 can receive a user input requesting to display one or more evaluation tools and/or one or more evaluation tool configurations. The system 120 can store and/or retrieve information associated with evaluation tools and/or evaluation tool configurations from a database such as evaluation tool(s) 123 in response to a user input.

Next, in response to the user input, the system 120 can access, for example, database module 121 and/or evaluation tool(s) 123 to provide information about one or more evaluation tools and/or evaluation tool configurations via a table 604. Table 604 can be generated in response to one or more user inputs as part of an evaluator agent configuration as depicted in user interface 400 of FIG. 4. In some implementations, table 604 can display information including: a tool name, a tag for one or more tools (e.g., an identifier used to group tools), and/or a version ID for the evaluation tool.

Next, in response to a user input selecting an evaluation tool, the system 120 can display and/or receive a user input to specifying evaluation tool configurations as depicted in block 308, 332, and/or 336 of example routine 300A. The system 120 can display tool details 606 depicting one or more evaluation tool configurations. The tool details 606 can include a tool name. Tool details 606 can vary depending on a user input selecting a deterministic and/or a nondeterministic tool.

As illustrated in the example user interface 600, the user has selected a nondeterministic tool. In response to a user input selecting a nondeterministic tool as depicted in block 332 and/or 336 of example routine 300, the system 120 can receive a user input including instructions associated with a prompt. The prompt can be transmitted to an LLM as described herein. Tool details 606 can include for example: an evaluation tool definition 608, an evaluation tool description 610, an example input 612, and/or an example response 614. An evaluation tool definition 608 can describe one or more properties of an evaluation tool such as an evaluation tool ID, a version for an evaluation tool, an owner and/or creator of an evaluation tool, and/or any searchable tags associated with an evaluation tool. An evaluation tool description 610 can describe an overall objective of an evaluation tool and/or use cases for an evaluation tool. An example input 612 can be a copy of data and one or more instructions to use the data as part of the LLM's response. For example, the system 120 can receive from a user and/or generate instructions for a prompt that includes a list of one or more object types, references to an ontology, data object types, data objects, sets of data objects, and/or the like. An example response 614 can include instructions describing an expected output format for an LLM response, such as instructions requesting that a response from LLM 125 and/or external LLM 130 include an interchangeability score, a confidence score, and an explanation for a result and/or the like.

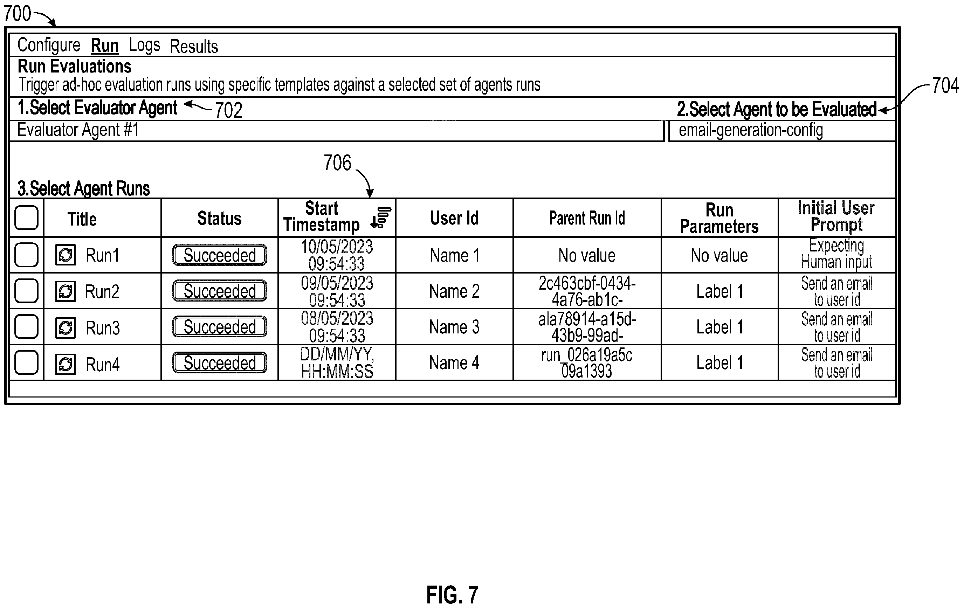

FIG. 7 illustrates an example user interface 700 for displaying and/or selecting information associated with an agent to be evaluated. The example user interface 700 illustrates various example functionality of the system 120 described, for example, in reference to block 304 of example routine 300.

Example user interface 700 can display one or more aspects of an evaluator agent configuration, enabling a user to select an evaluator agent 702, a base agent 704, and select run logs from a table 706. In response to a user input selecting a base agent 704, the system 120 can generate a table 706. The table 706 can include a list of run logs for a base agent 704. The table 706 can further include a unique ID for each run log, a status for each run log (e.g., succeeded, failed), a time stamp, a run ID, and/or an initial prompt used during the base agent run.

In some implementations, the system 120 can display information associated with an evaluator agent configuration as part of example user interface 700 in response to creating an evaluator agent as illustrated in example user interface 400. For example, in response to a user input selecting a "batch mode" as part of an evaluator type 428 selection, the system 120 can display an example user interface 700 including agent run logs. As an additional example, in response to a user input selecting a base agent 406 as part of an example user interface 400, the system 120 can display an example user interface 700 including run logs associated with the base agent 406. As described above, the system 120 can execute an evaluator agent 702, to evaluate the selected run logs in table 706, in response to a user input selecting one or more run logs, and/or a user input selecting to execute an evaluator agent.

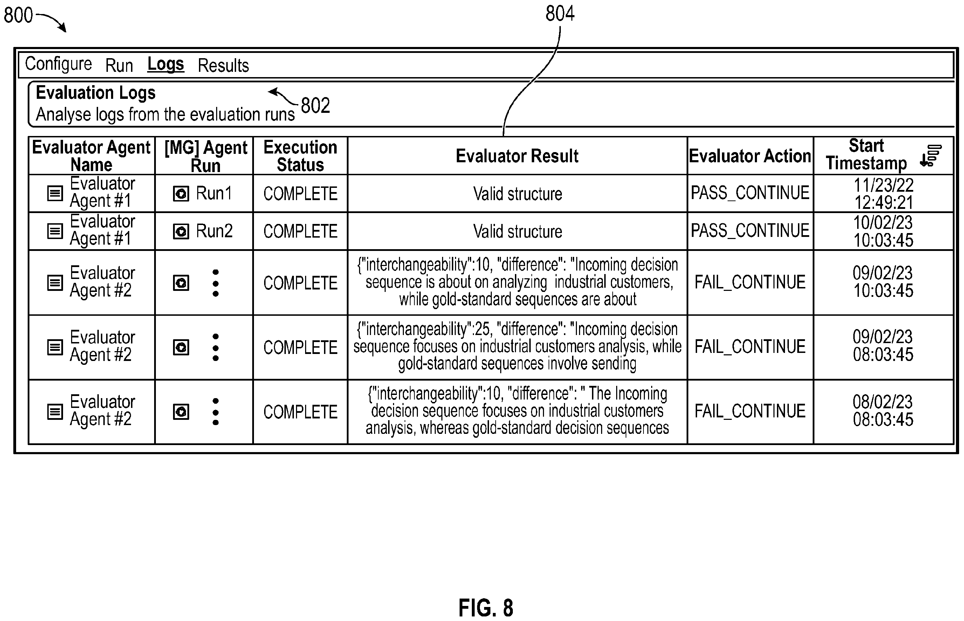

FIG. 8 illustrates an example user interface 800 for displaying and/or selecting information associated with an evaluator agent run. The example user interface 800 illustrates various example functionality of the system 120 described, for example, in reference to block 320 of example routine 300.

Example user interface 800 can display one or more aspects of evaluation agent runs via system prompt 802 as described with reference to block 320 of example routine 300. For example, the system 120 can receive a user input requesting to display evaluation metrics. Further, the system 120 can store and/or retrieve information associated with evaluation metrics from database module 121 in response to a user input, and display information associated with evaluation metrics as example user interface 800.

The system 120 can generate evaluation metrics in response to a completed evaluator agent run. Additionally and/or alternatively, the system 120 can transmit evaluation metrics to one or more agents, user 150, and/or to an external system(s) 140. In the example user interface 800, table 804 can display: an evaluator agent name, a run ID for an evaluator agent, an execution status, an evaluation result, and/or an evaluator action.

An execution status can describe whether the evaluator agent finished a run (e.g., complete, incomplete). An evaluation result can include information associated with the outcome of an evaluator agent run including whether the run was valid or invalid, whether the run passed or failed. Additionally, an evaluator agent result can be a response from an LLM based on the execution of an evaluation tool such as an interchangeability score and/or a compatibility score, and/or the like. An evaluator action can be associated with one or more parameters configured as part of an evaluator agent configuration. For example, when an evaluator agent evaluator type is dependent, an evaluator action is abort and a failure is detected during an evaluator agent run, the system 120 can generate an evaluator action including "fail_abort". When an evaluator agent evaluator type is independent, and evaluator action is alert and a failure is detected during an evaluator agent run, the system 120 can generate an evaluator action including "fail_continue". Lastly, if the evaluator agent run does not fail, the system 120 can generate an evaluator action including "pass_continue".

### VI. Additional Example Implementations and Aspects

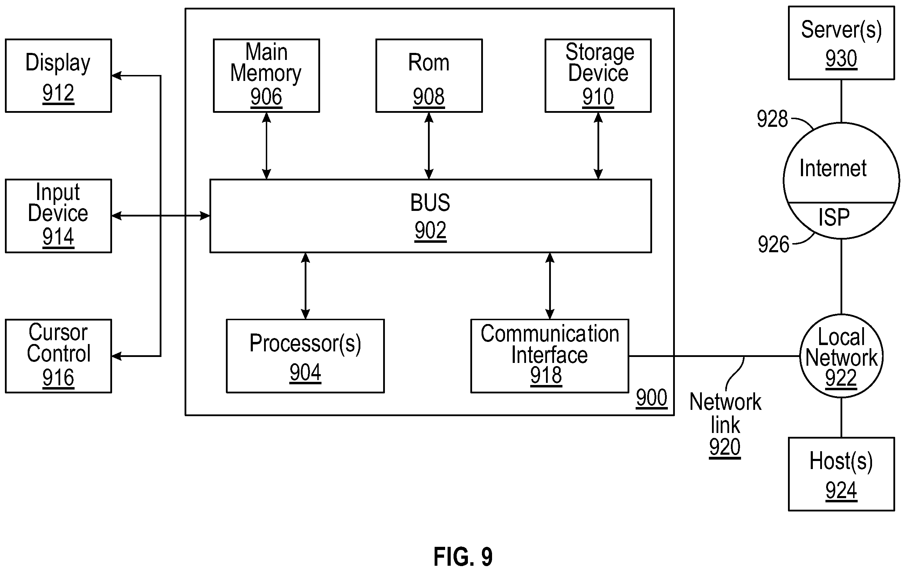

In an implementation the system (e.g., one or more aspects of the system 120, one or more aspects of the computing environment 100, and/or the like) may include, or be implemented in, a "virtual computing environment". As used herein, the term "virtual computing environment" should be construed broadly to include, for example, computer-readable program instructions executed by one or more processors (e.g., as described in the example of FIG. 9) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may include a modification of the operation of the virtual computing environment in response to inputs and according to various rules. Other functionality implemented by the virtual computing environment (as described throughout this disclosure) may further include modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may include one or more virtual machines, containers, and/or other types of emulations of computing systems or environments. In some implementations the virtual computing environment may include a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can include a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may include copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein includes an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which includes one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a GUI, among other things.

For example, Figure 9 shows a block diagram that illustrates a computer system 900 upon which various implementations and/or aspects (e.g., one or more aspects of the computing environment 100, one or more aspects of the system 120, one or more aspects of the user 150, one or more aspects of the external system(s) 140, and/or the like) may be implemented. Multiple such computer systems 900 may be used in various implementations of the present disclosure. Computer system 900 includes a bus 902 or other communication mechanism for communicating information, and a hardware processor, or multiple processors, 904 coupled with bus 902 for processing information. Hardware processor(s) 904 may be, for example, one or more general purpose microprocessors.

Computer system 900 also includes a main memory 906, such as a random-access memory (RAM), cache and/or other dynamic storage devices, coupled to bus 902 for storing information and instructions to be executed by processor 904. Main memory 906 also may be used for storing temporary variables or other intermediate information during execution of instructions to be executed by processor 904. Such instructions, when stored in storage media accessible to processor 904, render computer system 900 into a special-purpose machine that is customized to perform the operations specified in the instructions. The main memory 906 may, for example, include instructions to implement server instances, queuing modules, memory queues, storage queues, user interfaces, and/or other aspects of functionality of the present disclosure, according to various implementations.

Computer system 900 further includes a read only memory (ROM) 908 or other static storage device coupled to bus 902 for storing static information and instructions for processor 904. A storage device 910, such as a magnetic disk, optical disk, or USB thumb drive (Flash drive), and/or the like, is provided and coupled to bus 902 for storing information and instructions.

Computer system 900 may be coupled via bus 902 to a display 912, such as a cathode ray tube (CRT) or LCD display (or touch screen), for displaying information to a computer user. An input device 914, including alphanumeric and other keys, is coupled to bus 902 for communicating information and command selections to processor 904. Another type of user input device is cursor control 916, such as a mouse, a trackball, or cursor direction keys for communicating direction information and command selections to processor 904 and for controlling cursor movement on display 912. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computing system 900 may include a user interface module to implement a GUI that may be stored in a mass storage device as computer executable program instructions that are executed by the computing device(s). Computer system 900 may further, as described below, implement the techniques described herein using customized hard-wired logic, one or more ASICs or FPGAs, firmware and/or program logic which in combination with the computer system causes or programs computer system 900 to be a special-purpose machine. According to one implementation, the techniques herein are performed by computer system 900 in response to processor(s) 904 executing one or more sequences of one or more computer-readable program instructions contained in main memory 906. Such instructions may be read into main memory 906 from another storage medium, such as storage device 910. Execution of the sequences of instructions contained in main memory 906 causes processor(s) 904 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 904 for execution. For example, the instructions may initially be carried on a magnetic disk or solid-state drive of a remote computer. The remote computer can load the instructions into its dynamic memory and send the instructions over a telephone line using a modem. A modem local to computer system 900 can receive the data on the telephone line and use an infra-red transmitter to convert the data to an infra-red signal. An infra-red detector can receive the data carried in the infra-red signal and appropriate circuitry can place the data on bus 902. Bus 902 carries the data to main memory 906, from which processor 904 retrieves and executes the instructions. The instructions received by main memory 906 may optionally be stored on storage device 910 either before or after execution by processor 904.

Computer system 900 also includes a communication interface 918 coupled to bus 902. Communication interface 918 provides a two-way data communication coupling to a network link 920 that is connected to a local network 922. For example, communication interface 918 may be an integrated services digital network (ISDN) card, cable modem, satellite modem, or a modem to provide a data communication connection to a corresponding type of telephone line. As another example, communication interface 918 may be a local area network (LAN) card to provide a data communication connection to a compatible LAN (or WAN component to communicated with a WAN). Wireless links may also be implemented. In any such implementation, communication interface 918 sends and receives electrical, electromagnetic, or optical signals that carry digital data streams representing various types of information.

Network link 920 typically provides data communication through one or more networks to other data devices. For example, network link 920 may provide a connection through local network 922 to a host computer 924 or to data equipment operated by an Internet Service Provider (ISP) 926. ISP 926 in turn provides data communication services through the worldwide packet data communication network now commonly referred to as the "Internet" 928. Local network 922 and Internet 928 both use electrical, electromagnetic, or optical signals that carry digital data streams. The signals through the various networks and the signals on network link 920 and through communication interface 918, which carry the digital data to and from computer system 900, are example forms of transmission media.

Computer system 900 can send messages and receive data, including program code, through the network(s), network link 920 and communication interface 918. In the Internet example, a server 930 might transmit a requested code for an application program through Internet 928, ISP 926, local network 922 and communication interface 918.

The received code may be executed by processor 904 as it is received, and/or stored in storage device 910, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### VII. Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computer-implemented method, performed by a computing system having one or more hardware computer processors and one or more computer-readable storage mediums storing software instructions executable by the computing system, the computer-implemented method comprising: receiving, from a user via one or more graphical user interfaces, one or more user inputs including: a first user input requesting to provide an evaluator agent configuration for an evaluator agent; a second user input specifying information associated with an agent to be evaluated; a third user input specifying an evaluation tool, wherein the evaluation tool is configurable to evaluate the information associated with the agent; and a fourth user input specifying an evaluation tool configuration associated with the evaluation tool; creating the evaluator agent based on the evaluator agent configuration, wherein the evaluator agent configuration comprises an indication of the information associated with the agent to be evaluated, an indication of the evaluation tool, and an indication of the evaluation tool configuration; and evaluating, using the evaluator agent, the information associated with the agent.

Clause 2. The computer-implemented method of Clause 1, wherein the information associated with an agent includes a run log of the agent to be evaluated.

Clause 3. The computer-implemented method of any of Clauses 1-2, further comprising: displaying, via a user device, an evaluator agent configuration user interface, of the one or more graphical user interfaces, in response to receiving at least the first user input.

Clause 4. The computer-implemented method of any of Clauses 1-3, wherein the one or more user inputs further include: a fifth user input specifying a reference, wherein the reference includes information associated with a run log from one or more successful agent runs.

Clause 5. The computer-implemented method of any of Clauses 1-4, wherein the evaluation tool comprises a deterministic evaluation tool.

Clause 6. The computer-implemented method of Clause 5, wherein the evaluation tool configuration includes a JSON structure.

Clause 7. The computer-implemented method of any of Clauses 1-6, wherein the evaluation tool comprises a nondeterministic evaluation tool.

Clause 8. The computer-implemented method of Clause 7, wherein the nondeterministic evaluation tool includes and/or invokes a large language model (LLM) to evaluate the information associated with the agent.

Clause 9. The computer-implemented method of any of Clauses 7-8, wherein the evaluation tool configuration includes at least one instruction for a prompt.

Clause 10. The computer-implemented method of any of Clauses 1-9 wherein the evaluator agent is created in response to at least one of the first user input, the second user input, the third user input, or the fourth user input.

Clause 11. The computer-implemented method of any of Clauses 1-10, further comprising: generating at least one evaluation metric in response to evaluating the information associated with the agent.

Clause 12. The computer-implemented method of any of Clauses 1-11, wherein the one or more user inputs further include: a sixth user input specifying at least one of: an evaluator type, an evaluator effect, or an evaluator level for an evaluator agent.

Clause 13. The computer-implemented method of Clause 12, wherein the evaluator type includes at least one of: batch, live, independent, or dependent.

Clause 14. The computer-implemented method of Clause 12, wherein the evaluator level includes a starting step defining a first step the evaluator agent evaluates, or an ending step defining a last step the evaluator agent evaluates.

Clause 15. The computer-implemented method of any of Clauses 1-14, further comprising: aborting an evaluator agent run in response to evaluating the information associated with the agent.

Clause 16. The computer-implemented method of any of Clauses 1-15, further comprising: generating an alert in response to evaluating the information associated with the agent.

Clause 17. A system comprising: one or more computer-readable storage mediums having program instructions embodied therewith; and one or more processors configured to execute the program instructions to cause the system to perform the computer-implemented method of any of Clauses 1-16.

Clause 18. A computer program product comprising one or more computer-readable storage mediums having program instructions embodied therewith, the program instructions executable by one or more processors to cause the one or more processors to perform the computer-implemented method of any of Clauses 1-16.

## Claims

1. A computer-implemented method, performed by a computing system having one or more hardware computer processors and one or more computer-readable storage mediums storing software instructions executable by the computing system, the computer-implemented method comprising:
receiving, from a user via one or more graphical user interfaces, one or more user inputs including:
a first user input requesting to provide an evaluator agent configuration for an evaluator agent;
a second user input specifying information associated with an agent to be evaluated;
a third user input specifying an evaluation tool, wherein the evaluation tool is configurable to evaluate the information associated with the agent; and
a fourth user input specifying an evaluation tool configuration associated with the evaluation tool;
creating the evaluator agent based on the evaluator agent configuration, wherein the evaluator agent configuration comprises an indication of the information associated with the agent to be evaluated, an indication of the evaluation tool, and an indication of the evaluation tool configuration; and
evaluating, using the evaluator agent, the information associated with the agent.

2. The computer-implemented method of Claim 1, wherein the information associated with an agent includes a run log of the agent to be evaluated.

3. The computer-implemented method of any of Claims 1-2, further comprising:
displaying, via a user device, an evaluator agent configuration user interface, of the one or more graphical user interfaces, in response to receiving at least the first user input.

4. The computer-implemented method of any of Claims 1-3, wherein the one or more user inputs further include:
a fifth user input specifying a reference, wherein the reference includes information associated with a run log from one or more successful agent runs.

5. The computer-implemented method of any of Claims 1-4, wherein the evaluation tool comprises a deterministic evaluation tool.

6. The computer-implemented method of Claim 5, wherein the evaluation tool configuration includes a JSON structure.

7. The computer-implemented method of any of Claims 1-6, wherein
the evaluation tool comprises a nondeterministic evaluation tool, and
optionally the nondeterministic evaluation tool includes and/or invokes a large language model (LLM) to evaluate the information associated with the agent.

8. The computer-implemented method of any of Claim 7, wherein the evaluation tool configuration includes at least one instruction for a prompt.

9. The computer-implemented method of any of Claims 1-8 wherein the evaluator agent is created in response to at least one of the first user input, the second user input, the third user input, or the fourth user input.

10. The computer-implemented method of any of Claims 1-9, further comprising:
generating at least one evaluation metric in response to evaluating the information associated with the agent.

11. The computer-implemented method of any of Claims 1-10, wherein the one or more user inputs further include:
a sixth user input specifying at least one of: an evaluator type, an evaluator effect, or an evaluator level for an evaluator agent,
wherein optionally, the evaluator type includes at least one of: batch, live, independent, or dependent, and
wherein optionally the evaluator level includes a starting step defining a first step the evaluator agent evaluates, or an ending step defining a last step the evaluator agent evaluates.

12. The computer-implemented method of any of Claims 1-11, further comprising:
aborting an evaluator agent run in response to evaluating the information associated with the agent,
wherein optionally the evaluator agent run is aborted in the event that the evaluated information indicates detection of a failure or detection of an evaluation parameter that meets one or more triggering criteria, for example indicative that the parameter is below a required performance threshold and/or is less performant than another agent, and wherein optionally an abort evaluator effect is indicated to the user via a graphical user interface element providing one or more instructions for guiding the user to overcome or alleviate the cause of the abort.

13. The computer-implemented method of any of Claims 1-12, further comprising: generating an alert in response to evaluating the information associated with the agent,
wherein optionally the alert is generated in the event that the evaluated information indicates detection of a failure or detection of an evaluation parameter that meets one or more triggering criteria, for example indicative that the parameter is below a required performance threshold and/or is less performant than another agent, and wherein optionally an alert evaluator effect is indicated to the user via a graphical user interface element providing one or more instructions for guiding the user to overcome or alleviate the cause of the alert.

14. A system comprising:
one or more computer-readable storage mediums having program instructions embodied therewith; and
one or more processors configured to execute the program instructions to cause the system to perform the computer-implemented method of any of Claims 1-13.

15. A computer program product comprising one or more computer-readable storage mediums having program instructions embodied therewith, the program instructions executable by one or more processors to cause the one or more processors to perform the computer-implemented method of any of Claims 1-13.
